# EUROPÄISCHE PATENTSCHRIFT

(11) **EP 3 230 008 B1**
(45) Veröffentlichungstag und Bekanntmachung des Hinweises auf die Patenterteilung: **19.09.2018**
(21) Anmeldenummer: 15805221.7
(22) Anmeldetag: 08.12.2015
(51) Int. Cl.: B24B 5/42, B24B 49/04

(54) **MESS-LÜNETTE ZUM ABSTÜTZEN UND VERMESSEN VON ZENTRISCHEN WERKSTÜCKBEREICHEN, SCHLEIFMASCHINE MIT EINER DERARTIGEN MESS-LÜNETTE SOWIE VERFAHREN ZUM ABSTÜTZEN UND VERMESSEN VON ZENTRISCHEN WERKSTÜCKBEREICHEN**
MEASURING STEADY REST FOR SUPPORTING AND MEASURING CENTRAL WORKPIECE REGIONS, GRINDING MACHINE WITH SUCH A MEASURING STEADY REST, AND METHOD FOR SUPPORTING AND MEASURING CENTRAL WORKPIECE REGIONS
LUNETTE DE MESURE POUR SUPPORTER ET MESURER DES ZONES DE PIÈCE CENTRÉES, MEULEUSE POURVUE D'UNE TELLE LUNETTE DE MESURE ET PROCÉDÉ DE SUPPORT ET DE MESURE DE ZONES DE PIÈCE CENTRÉES

(30) Priorität: 09.12.2014 DE 102014225295
(43) Veröffentlichungstag der Anmeldung: 18.10.2017
(73) Patentinhaber: Erwin Junker Maschinenfabrik GmbH, 77787 Nordrach (DE)
(72) Erfinder: JUNKER, Erwin, 77815 Bühl/Baden (DE)
(74) Vertreter: Leske, Thomas
(86) Internationale Anmeldenummer: PCT/EP2015/078949
(87) Internationale Veröffentlichungsnummer: WO 2016/091864

(56) Entgegenhaltungen:
- DE-T2- 69 014 883

## Beschreibung

Die Erfindung betrifft eine Mess-Lünette zum Abstützen und Vermessen von zentrischen Werkstückbereichen, insbesondere Lagerstellen an Wellenteilen, insbesondere Kurbelwellen, eine Schleifmaschine zum Schleifen von zumindest zentrischen Werkstückbereichen insbesondere an Kurbelwellen mit einer derartigen Mess-Lünette sowie ein Verfahren zum Abstützen und Vermessen von zentrischen Werkstückbereichen, insbesondere an Kurbelwellen mit einer derartigen Mess-Lünette auf einer derartigen Schleifmaschine.

Es sind Lünetten zum Abstützen von zentrischen Werkstückbereichen während der Bearbeitung von zentrischen und/oder exzentrischen Werkstückbereichen, insbesondere Lagerstellen an insbesondere Kurbelwellen, bekannt. Diese Lünetten dienen dazu, so genannte relativ weiche Werkstücke, wie es beispielsweise Kurbelwellen sind, während des Schleifens zusätzlich derartig abzustützen, dass durch das Einbringen der Schleifkräfte möglichst keine oder zumindest nur eine sehr geringe Deformation des zu schleifenden Werkstückes auftritt. Insbesondere bei längeren Kurbelwellen ergibt sich daher die Notwendigkeit, während des Schleifens zur Aufnahme der eingebrachten Schleifkräfte möglichst an mehreren Hauptlagern einer derartigen Kurbelwelle oder bei anderen Wellenteilen an möglichst mehreren Stellen über deren Längserstreckung verteilt derartige Lünetten einzusetzen. Bei dem Versuch, die Effektivität der Herstellungsprozesse zu optimieren, werden nun gewöhnlich eine oder mehrere Schleifscheiben eingesetzt, welche zumindest zeitweise zeitparallel die zu bearbeitenden zentrischen Wellenabschnitte schleifen. Aus Gründen beschränkten Platzes ergeben sich daher beim Einsatz von mehreren Lünetten Schwierigkeiten, auch noch eine Messeinrichtung vorzusehen, welche platzmäßig weder mit der bzw. den Schleifscheiben noch mit den Lünetten kollidiert. Eine Lösung, die in diesem Zusammenhang, wenn während des Schleifens gemessen werden soll, vorgesehen worden ist, ist das Unterbrechen des Schleifvorganges und dann das Vermessen des aktuell erzielten Durchmessers. Eine tatsächliche In-Prozess-Messung stellt dies nicht dar.

Auf Schleifmaschinen zum Schleifen von Kurbelwellen kommen häufig Lünetten der Firma AROBOTECH Systems Inc. zum Einsatz, Diese bekannten Lünetten weisen in der Regel drei Backen auf, welche an der Anlage an der Lagerstelle meist eine PKD (Polykristalline Diamant-) -Beschichtung oder CBN (Cubisches Bornitrit-) -Beschichtung aufweisen. Lünetten mit drei Backen haben den Vorteil, dass eine jeweilige abzustützende Lagerstelle sozusagen "eingespannt" ist. Damit ist ein Werkstück in seiner Lage selbstzentrierend eingespannt, und die Zustellung der Backen erfolgt in Richtung der Werkstückmitte, d. h. zentrisch zum Durchmesser des jeweiligen zentrischen Werkstückabschnittes. Die Bewegungen der einzelnen Lünettenbacken sind mechanisch zwangsgekoppelt, was zu einem relativ komplizierten mechanischen System führt. Derartige Lünetten machen hinsichtlich ihres Einsatzes jedoch nur dann Sinn, wenn die zu bearbeitenden Lagerstellen schon relativ gut vorbearbeitet sind, damit die Lünette zuverlässig anliegt und abstützen kann. Ein Nachführen der Lünette während des Schleifvorganges ist aus den vorstehend genannten Gründen daher aufwendig und schwierig in der Herstellung. Die mechanische Zwangskupplung der drei Backen der bekannten Lünette erfordert relativ große, bei der Zustellung zu übernehmende Kräfte, die zu verstärkten Laufspuren an der abzustützenden Lagerstelle führen können. So genannte Zwei-Punkt-Lünetten, bei denen die Abstütz-Auflagen gegebenenfalls auch bereits PKD-bestückt sind, werden mit CNC-Achsen zugestellt. Bei einem Einsatz von zwei separaten CNC-Achsen erhöht sich der Bauaufwand solcher Lünetten und damit deren Kosten weiter. Die beiden Stützpunkte bzw. Stützbereiche von derartigen bekannten Zwei-Punkt-Lünetten sind rechtwinklig zueinander angeordnet, wobei eine derartige Lünette in der Regel gegenüber der Schleifscheibe angeordnet ist, damit die Schleifkräfte aufgenommen werden können.

Es sind auch schon Lünetten bekannt, bei welchen zwei Stützstellen zwangsgesteuert angeordnet sind wie in US 6 257 972 B1. Die beschriebenen zwei Stützstellen der bekannten Lünette werden gegen eine dritte gegenüberliegende Stützstelle abgestützt. Die einzelnen Lünettenstützelemente sind entweder mittels Anschlägen festgelegt oder an einem fertiggeschliffenen Lager angelegt. Ein Nachführen der Lünette beim Schleifen des Lünettensitzes ist nicht vorgesehen und auch nicht möglich.

Aus DE 10 2011 015 205 B3 ist des Weiteren eine Zwei-Punkt-Lünette mit fest zueinander angeordneten zwei Stützteilen bekannt. Eine derartige bekannte Lünette wird zum horizontalen und vertikalen Abstützen eines Werkstückes eingesetzt und weist zwei in seitlichem Abstand zueinander angeordnete relativ zum Werkstück verstellbare Stützglieder auf. Derartige bekannte Lünetten führen insbesondere hinsichtlich der erzielbaren Rundlaufgenauigkeit nur zu einer begrenzten, für viele heutige Anwendungen allenfalls nur ungenügend nutzbare Anwendungen.

Diesen bekannten Lünetten ist gemein, dass sie nicht nur zum Zwecke des Beladens und Entladens eines neuen Werkstückes wegen ihres relativ großen Platzbedarfes sondern auch zum Zwecke des Messens zurückgezogen werden müssen. Separate Messeinrichtungen, welche in aller Regel zu dem zu messenden Werkstückbereich eingeschwenkt werden, haben aufgrund von dazu erforderlichen Bewegungsgliedern zusätzliche Ungenauigkeiten im Messergebnis. Abgesehen davon, sind echte In-Prozess-Messungen mit derartigen Vorrichtungen kaum möglich.

Dies wird insbesondere problematisch, wenn entweder sich in Längsrichtung des zu messenden bzw. zu bearbeitenden Werkstückbereiches Abweichungen von der Zylindrizität vorhanden sind, oder wenn man gerade derartige Ungenauigkeiten messen will, weil in solchen Fällen die Messeinrichtung an mehreren in Längsrichtung nebeneinander liegenden Ebenen das zu vermessende Bauteil bzw. den zu vermessenden Werkstückbereich messen muss. Für die Schleifbearbeitung von Wellenteilen und dabei insbesondere von Lagerstellen an Kurbelwellen werden häufig Messvorrichtungen beispielsweise der Firmen Marposs S.p.A. oder auch JENOPTIK Industrial Metrology Germany GmbH eingesetzt.

So ist aus DE 694 13 041 T2 ein Messaufnehmer der Firma Marposs S.p.A. zur Kontrolle von linearen Größen bekannt. Dieses Messgerät kann zum Messen von Innendurchmessern von Bohrungen wie auch von Außendurchmessern eingesetzt werden. Dazu ist ein beweglicher Fühler in Form eines kugelförmigen Elementes vorgesehen, wobei mittels eines zusätzlichen Elementes Auslenkungen an das kugelförmige Element übertragen werden. Bei diesem bekannten Messgerät ist das kugelförmige Element in Kontakt mit einer Anschlagfläche, auf welcher es in Schrägrichtung bewegbar ist, wobei die Anschlagfläche im Querschnitt konkav ausgebildet ist, was als Sitz für das kugelförmige Element dient und dieses in Schrägrichtung führt.

Des Weiteren ist in DE 33 36 072 C2 eine Tasteinrichtung zum Messen linearer Dimensionen beschrieben, welche ebenfalls von der Firma Marposs S.p.A. angemeldet worden ist. Auch hier erfolgt die Messung mit den bekannten Tastköpfen für Außenabmessungen wie auch für Innenabmessungen in einer Ebene senkrecht zur Längsachse des zu vermessenden fertig bearbeiteten Werkstückbereiches. Allerdings ist eine Vermessung von Formabweichungen oder Profilierungen in Längsrichtung des zentrischen Werkstückabschnittes nicht beschrieben.

Des Weiteren sind in dem Prospekt MOVOLINE In-Prozess-Messtechnik der Firma JENOPTIK eine derartige In-Prozess-Messtechnik zur Vermessung bearbeiteter Werkstückbereiche einschließlich auch der kontinuierlichen Messung dieser Abmessungen während des Bearbeitens zur adaptiven Steuerung des Schleifprozesses in Abhängigkeit von den gemessenen Werkstückparametern sowie auch der optionale Einsatz dieser Messvorrichtungen zur Kontrolle der Rundheit beschrieben (siehe Messsysteme DF500 bzw. DF700, Seite 15). Bei diesem bekannten Messsystem ist ebenfalls beschrieben, zur Bestimmung von Außendurchmessern mit zwei Messköpfen im Sinne einer In-Prozess-Messung zu arbeiten. Auch wenn die Formabmessungen nach Beendigung des Schleifens oder eines Schleifprozessschrittes vorgenommen, nicht jedoch zur adaptiven Steuerung verwendet werden, so benötigt auch dieses Messsystem zusätzlichen, nur eingeschränkt an einer Schleifmaschine für solche hochkomplexen Bauteile wie eine Kurbelwelle vorhandenen Platzbedarf.
Darüber hinaus sind Lünetten bekannt, mit welchen bereits gewisse Messungen am abzustützenden Werkstück vorgenommen werden können. In DE 102 09 371 A1 ist eine schnellzentrierbare Lünette beschrieben, in welcher von der eigentlichen Abstützstelle der Lünette abgewandt ein Messsystem angeordnet ist, mittels welchem eine indirekte Vermessung des abgestütztem Werkstückbereichs ermöglicht werden sollen. Erforderlich ist dafür jedoch, dass wegen der Zentrierung nach Aufsetzen der Lünette an die Oberfläche des Werkstückes zunächst das Messsystem in der jeweiligen Pinole auf null oder ein Basismaß arretiert werden muss.

Des Weiteren ist aus dem nächstkommenden Stand der Technik, der DE 690 14 883 T2 eine Lünette mit Fernmessung bekannt. Bei der bekannten Lünette handelt es sich um eine Drei-Backen-Lünette mit selbstzentrierender Wirkung, bei welcher die jeweiligen Backen der Lünette über ein Gestänge mit einem Arbeitskörper verbunden sind, dessen Längsverschiebung wiederum das eigentliche Messergebnis des abgestützten Werkstückbereiches darstellt. Auch hier handelt es sich daher um eine indirekte Messung des abgestützten Werkstückbereiches, deren Genauigkeit durch zahlreiche zwischengeschaltete Bewegungsglieder eingeschränkt ist. Insbesondere für heute anzustrebende höchste Genauigkeiten bei zahlreichen herzustellenden Werkstücken dürfte vor allen Dingen bei Anwendung von In-Prozess-Messungen Grenzen gesetzt sein bei dieser bekannten Lünette mit Fernmessung.
Allen bekannten zusätzlichen Systemen beim Schleifen von insbesondere Kurbelwellen, und zwar Systemen zum zusätzlichen Abstützen, d. h. die Lünetten, wie auch Systemen zum Messen vorzugsweise vor oder während der Schleifbearbeitung, ist gemein, dass es entweder zusätzliche Messeinrichtungen erfordert, oder aber Messungen können nur diskontinuierlich durchgeführt werden. Mit bekannten Lünetten können die eigentlichen Messungen nur indirekt realisiert werden, was Einbußen bei der Messgenauigkeit einschließt.
Die Aufgabe der Erfindung besteht daher darin, eine Lünette zum zuverlässigen aktiven Abstützen eines zentrischen Werkstückbereiches bereitzustellen, mit welcher ohne das Erfordern zusätzlichen Bauraumes der zentrische Werkstückbereich genau vermessen werden kann und eine zuverlässige In-Prozess-Messung möglich ist, und zwar ohne dass die eigentliche Schleifbearbeitung zum Zwecke des Messens unterbrochen werden muss. Außerdem sollen eine Schleifmaschine mit einer derartigen Lünette sowie ein Verfahren zum Abstützen und Messen von zentrischen Wellenteilen auf einer Schleifmaschine mit einer derartigen Lünette bereitgestellt werden.
Diese Aufgabe wird durch eine Mess-Lünette mit den Merkmalen gemäß Anspruch 1, durch eine Schleifmaschine mit den Merkmalen gemäß Anspruch 4 und durch ein Verfahren mit den Merkmalen gemäß Anspruch 9 gelöst. Zweckmäßige Weiterbildungen sind in den jeweiligen abhängigen Ansprüchen definiert.
Nachfolgend sollen bei Verwendung des Begriffes "zentrische Lagerstelle" auch solche zentrischen Werkstückbereiche verstanden werden, welche zwar zentrisch ausgebildet sind, aber nicht zwingend am Werkstück bzw. Wellenteil eine Lagerstelle sind. Gleichermaßen soll unter "Wellenteil" auch ein Werkstück verstanden werden, welches einen zentrischen Werkstückbereich aufweist.
Gemäß einem ersten Aspekt der Erfindung wird eine Lünette bereitgestellt, welche neben ihrer herkömmlichen Einrichtung zum Abstützen auch noch eine darin integrierte Einrichtung zum direkten Anstellen an die und Vermessen der zentrischen Werkstückbereiche, insbesondere Lagerstellen an Wellenteilen, insbesondere Kurbelwellen, aufweist. Eine derartige Lünette wird hier nachfolgend eine Mess-Lünette genannt.
Die erfindungsgemäße Mess-Lünette weist eine Einrichtung zum Abstützen von zentrischen Werkstückbereichen, insbesondere Lagerstellen an Wellenteilen, insbesondere Kurbelwellen, vor und/oder während der Bearbeitung der Wellenteile mit integrierter Messeinrichtung zum direkten und vorzugsweise gleichzeitigen Vermessen der Werkstückbereiche auf.
Unter "direktem Vermessen" soll hier verstanden werden, das die innerhalb des Abstützbereiches der Mess-Lünette befindende Messeinrichtung direkt die Oberfläche des zu vermessenden zentrischen Werkstückbereiches kontaktiert.
Die erfindungsgemäße Mess-Lünette gewährleistet in vorteilhafter Weise, dass für das Messen eines durch eine Lünette abgestützten zu bearbeitenden Werkstückbereiches zum Einen kein zusätzlicher Platzbedarf in einer Bearbeitungsmaschine für eine Messeinrichtung erforderlich ist, so dass mit der erfindungsgemäßen Mess-Lünette ohne Verlust an Platz in der Maschine in überraschender Weise nicht nur ein Abstützen, sondern auch ein Vermessen des gerade bearbeiteten Werkstückbereiches mit der erfindungsgemäßen Mess-Lünette ermöglicht wird. Damit ist es zum anderen möglich, eine zuverlässig hohe Genauigkeit durch die direkte Vermessung des zu bearbeitenden Wellenteils zu erreichen.

Vorzugsweise ist die erfindungsgemäße Mess-Lünette zum Abstützen und Vermessen von zentrischen Werkstückbereichen vor und/oder während der Bearbeitung von sowohl zentrischen und/oder exzentrischen Werkstückbereichen oder auch anderen Bereichen an einem Wellenteil so ausgebildet, dass sie zum Schleifen aus einer zurückgezogenen Position und zum Abstützen des Werkstückbereiches in eine Abstützposition an den Werkstückbereich bringbar ist. Die Mess-Lünette weist vorzugsweise zumindest zwei an den Werkstückbereich zustellbare Stützteile auf, welche den Werkstückbereich bei an diesen angestellter Mess-Lünette an jeweiligen voneinander beabstandeten Umfangsbereichen abstützen. Die Stützteile bilden einen Öffnungswinkel zueinander an je einer Seitenflanke eines gabelartig sich öffnenden Prismas, welches an einem Lünettenarm angeordnet ist. Die Stützteile sind in fester Position zueinander und zum Lünettenarm sowie in der Abstützposition der Mess-Lünette untermittig zur Längsachse des Werkstückbereiches angeordnet. Diese Anordnung ist dabei derart vorgesehen, dass eine zwischen beiden Stützteilen gebildete Winkelhalbierende einen festen spitzen Winkel zur durch die Längsachse des Werkstückbereiches verlaufenden Senkrechten aufweist. Es erfolgt eine CNC-gesteuerte Zustellung des Lünettenarms an den Werkstückbereich entlang dieser Winkelhalbierenden, auf welcher die Messeinrichtung bezüglich ihrer Längsachse zum Vermessen des Werkstückbereiches angeordnet ist. Das bedeutet, dass die Längsachse der Messeinrichtung mit der Winkelhalbierenden, d. h. der Zustellachse X_{L} der Lünette an den abzustützenden Werkstückbereich, fluchtet.

An und für sich hat eine derartige Lünette in Form eines Prismas den "Nachteil", dass sie nicht selbstzentrierend ist. Das bedeutet, sie passt sich nicht automatisch an den Durchmesser des abzustützenden zentrischen Werkstückbereiches an. Dieser Nachteil wird nun dadurch kompensiert, dass, um möglichst genaue Durchmesser der zentrischen Werkstückbereiche herstellen zu können, der Durchmesser des zentrischen Werkstückbereiches beim Anstellen der Lünette vermessen wird. Durch die Integration einer Messeinrichtung in die Lünette kann damit eine normalerweise recht einfache und möglicherweise nicht allen Anforderungen an die Genauigkeit des Bearbeitungsprozesses zu stellenden Anforderungen kompensiert werden, wobei gleichzeitig für eine gesonderte ansonsten vorhandene Messeinrichtung Bauraum in der Maschine eingespart wird.

Vorzugsweise ist die Mess-Lünette zwischen einer zurückgezogenen und der Abstützposition auf ihrer X_{L}-Zustellachse bewegbar. Die Mess-Lünette ist so ausgebildet, dass ihr Lünettenarm mittels nur eines auf eine Gewindespindel arbeitenden Stellmotors bewegbar ist. Die X_{L}-Zustellachse der Lünette fällt erfindungsgemäß mit der Winkelhalbierenden zusammen und stellt eine gesonderte CNC-gesteuerte Zustellachse dar.

Um ein möglichst optimales Anlegen auch an einer Rohkontur des zu schleifenden Werkstückbereiches durch die Stützteile zu gewährleisten, sind diese je nach Einsatzzweck und qualitativer Ausbildung der abzustützenden Kontur des Werkstückbereiches ebenflächig, konvex gekrümmt oder mittels einer Mittelnut in zumindest zwei Stützabschnitte aufgeteilt ausgebildet. Und weiter vorzugsweise sind die Stützteile mit CBN- oder PKD-Oberflächen versehen. Dieses gewährleistet ein besonders verschleißarmes Gleiten der Stützteile an der abzustützenden Oberfläche des Werkstückbereiches bei rotierendem Werkstück. Da insbesondere bei einer Rohkontur des zu schleifenden bzw. abzustützenden Werkstückbereiches in Richtung der Längsachse des zentrischen Werkstückbereiches Durchmesserabweichungen vorhanden sein können, ist weiter vorzugsweise vorgesehen, dass die Stützteile an den Seitenflanken des Prismas um eine senkrecht zur Längsachse des Werkstückbereiches verlaufende Achse pendelnd gelagert sind. Unebenheiten in der Oberflächenkontur können dadurch zumindest besser ausgeglichen werden, als wenn die Stützteile fest an den jeweiligen Seitenflanken des Prismas der Mess-Lünette angebracht sind.

Vorzugsweise weist die vorzugsweise zwischen den Stützteilen des Prismas der Lünette angeordnete Messeinrichtung einen Taststift auf, welcher auf der Winkelhalbierenden relativ zu der CNC-gesteuerten Zustellung des Lünettenarmes entlang der X_{L}-Achse beweglich bzw. verschieblich angeordnet ist. Weiter vorzugsweise ist die Messeinrichtung unabhängig von der CNC-gesteuerten Zustellung des Lünettenarmes bewegbar. Dadurch ist es möglich, verschiedene Messaufgaben bei einer Anstellung der Lünette an einen abzustützenden Werkstückbereich sowohl auf dessen Rohmaß wie auch auf ein Zwischenmaß wie auch auf ein Endmaß anstellbar. Gewisse noch vorhandene Konturungenauigkeiten bei einem Zwischenmaß wie selbstverständlich erst recht bei dem Rohmaß des zu bearbeitenden zentrischen Werkstückbereiches können hinsichtlich der ansonsten vorhandenen Probleme beim Abstützen auf einer noch nicht fertiggeschliffenen Kontur für eine Lünette durch die zusätzliche Messvorrichtung kompensiert werden. Die Bewegung des Taststiftes in Richtung der Längsachse der Messeinrichtung bedeutet, dass der Taststift sich auf der X_{L}-Achse der Mess-Lünette bewegt und damit auch fluchtend mit der Winkelhalbierenden angeordnet ist. Dabei ist die Mess-Lünette im Einsatz bzgl. der im Wesentlichen gegenüberliegenden Schleifscheibe untermittig zum Wellenteil angeordnet.

Die erfindungsgemäße Mess-Lünette ist dabei vorteilhafterweise eine sehr kompakte Einrichtung, welche sowohl ein Abstützen am Werkstückbereich in Form einer mehr oder weniger herkömmlichen Lünette gewährleistet, welche aber gleichermaßen ein Vermessen des Werkstückes, und zwar an der Abstützstelle ermöglicht, ohne dass eine zusätzliche Messeinrichtung Bauraum an der abzustützenden und zu schleifenden zentrischen Werkstückstelle erfordert. Überraschenderweise hat sich nämlich gezeigt, dass die in die Lünette integrierte Messeinrichtung trotz der in einigen Betriebsfällen relativ großen Abstützkräfte, welche eine Lünette herkömmlicherweise aufnehmen muss, immer noch sehr zuverlässig und sehr genau ihrer Messaufgabe erfüllen kann.

Gemäß einem zweiten Aspekt der Erfindung ist eine Schleifmaschine zum Schleifen von zentrischen und/oder exzentrischen Werkstückbereichen an Werkstücken, insbesondere Lagerstellen von insbesondere Kurbelwellen vorgesehen, welche eine erfindungsgemäße Mess-Lünette mit den Merkmalen gemäß einem der Ansprüche 1 bis 5 und mit einer Steuervorrichtung vorgesehen, mittels welcher vor und/oder während des mittels einer Schleifscheibe erfolgenden Schleifens oder nach dem erfolgten Schleifen eines Werkstückbereiches die Mess-Lünette an einen zentrischen Werkstückbereich anstellbar ist und die Schleifscheibe bis zum Fertigmaß des Werkstückbereiches mittels ihrer CNC-Steuerungen zustellbar sind. Die Mess-Lünette ist als Stützprisma und derart ausgebildet, dass ihre ebenfalls CNC-gesteuerte Zustellbewegung auf den abzustützenden Werkstückbereich entlang der Winkelhalbierenden des Öffnungswinkels des Stützprismas erfolgt. Die Messeinrichtung ist auf der Winkelhalbierenden angeordnet, wobei ihre Längsachse mit der Winkelhalbierenden fluchtet. Durch die Ausbildung der Schleifmaschine mit einer CNC-Steuerung für die Schleifscheibe (X-Achse) sowie der CNC-Steuerung (X_{L}-Achse) der Mess-Lünette können sowohl die Steuerung der Zustellung der Schleifscheibe als auch der Zustellung der Mess-Lünette prozessoptimal und unter Berücksichtigung der jeweiligen Position von Schleifscheibe und Mess-Lünette erfolgen. Insbesondere ist es vorzugsweise möglich, dass die exakten Positionen der Schleifscheibe und der Mess-Lünette in Abhängigkeit von dem Messergebnis der Messeinrichtung beim Vermessen des zentrischen Werkstückbereiches aufeinander abgestimmt werden können.

Vorzugsweise übermittelt die Messeinrichtung Messsignale des Durchmessers des Werkstückbereiches für die Zustellposition der Mess-Lünette an der Lagerstelle bzw. an dem Werkstückbereich an die Steuereinrichtung, wobei auf Basis dieser Messsignale die Zustellpositionen der Mess-Lünette gesteuert werden. Vorzugsweise ist des Weiteren die Steuereinrichtung so ausgebildet, dass auf Basis der Messsignale die X-Achsen-Zustellposition der Schleifscheibe steuerbar ist. Dadurch kann durch eine Abstimmung zwischen der Zustellung der Schleifscheibe und der Zustellung der Mess-Lünette stets die optimale Anstellkraft der Mess-Lünette an dem bearbeiteten Werkstückbereich erfolgen. Unter optimaler Einstellung ist dabei zu verstehen, dass die Kräfte, welche durch die Schleifscheibe in das Werkstück eingeleitet werden, wie auch die Kraft der Lünette auf das Werkstück einstellbar sind, um es bspw. ggf. geringfügig zu Überdrücken, so dass nach dem Schleifen und nach oder im Ergebnis des Messvorganges eine optimale, auf die Längsachse des zentrischen Werkstückbereiches ausgerichtete Zylindrizität herstellbar ist.

Vorzugsweise ist die Messeinrichtung entlang der Winkelhalbierenden relativ zu der Zustellbewegung der Mess-Lünette veränderbar. Und weiter vorzugsweise erfolgen die CNC-gesteuerten Zustellungen von Schleifscheibe und Mess-Lünette synchron zueinander. Bei einer synchronen Zustellung von Schleifscheibe und Mess-Lünette ist es im Sinne eines optimalen und hochgenauen Bearbeitungsergebnisses erforderlich, dass die Messergebnisse der Messeinrichtung der Mess-Lünette an die Steuereinrichtung übermittelt und dort entsprechend ausgewertet werden.

Es ist jedoch weiter vorzugsweise auch möglich, dass die Mess-Lünette mittels der Steuereinrichtung der X-Achsen-Zustellposition der Schleifscheibe nachführbar ist. Bei einem Nachführen der Mess-Lünette der X-Achsen-Position der Schleifscheibe reagiert sozusagen die Mess-Lünette mit ihrer jeweiligen Abstütz-Position am Werkstückbereich, welcher abzustützen und zu vermessen ist, auf die erreichte Zustellposition der Schleifscheibe.

Besonders vorteilhaft ist es, wenn die Winkelhalbierende einen derartigen Winkel zur Senkrechten bildet, dass beim Schleifen ausgeübte resultierende Kräfte den Werkstückbereich in das Stützprisma an die Stützteile lagefixierend drücken.

Wenn die Mess-Lünette der X-Achsen-Zustellposition der Schleifscheibe nachgeführt wird, dann wird vorzugsweise die Abstützposition eine Endposition der Zustellung sein, bei welcher das Stützprisma in der Endposition an einem fertiggeschliffenen Werkstückbereich anliegt.

Zusammenfassend ist festzustellen, dass die erfindungsgemäße Schleifmaschine mit der erfindungsgemäßen Mess-Lünette das Problem überwindet, dass der beschränkt vorhandene Platz, welcher durch das Vorsehen einer zusätzlichen, von der Lünette unabhängigen Messeinrichtung, wie es im Stand der Technik üblich ist, nicht weiter eingeschränkt wird, sondern dass die in die Mess-Lünette integrierte Messvorrichtung nicht nur platzmäßig erhebliche Vorteile gegenüber den bekannten Einrichtungen im Stand der Technik bietet, sondern darüber hinaus die Möglichkeit schafft, dass eine Mess-Lünette sowohl für eine Rohkontur als auch eine Zwischenkontur als auch eine fertiggeschliffene Kontur einsetzbar ist und gleichzeitig mit der direkten Messung der jeweils aktuellen Durchmesserdaten an den bearbeiteten zentrischen Werkstückbereich optimale Bearbeitungsergebnisse erzielbar sind.

Gemäß einem dritten Aspekt der Erfindung wird ein Verfahren zum Abstützen und Vermessen von zentrischen Werkstückbereichen, insbesondere Lagerstellen an Wellenteilen, insbesondere einer Kurbelwelle, vor und/oder während der Bearbeitung von zentrischen und/oder exzentrischen Werkstückbereichen mittels einer eine von einer Steuereinrichtung CNC-gesteuerte Zustellachse aufweisenden Schleifscheibe bereitgestellt, bei welchem Verfahren eine Messeinrichtung an einer an einem Lünettenarm angeordneten Mess-Lünette gemäß einem der Ansprüche 1 bis 5 auf einer Schleifmaschine gemäß einem der Ansprüche 6 bis 13 in Kontakt mit dem zu vermessenden Werkstückbereiche mittels einer CNC-Achse des Lünettenarmes gebracht wird und der noch unbearbeitete, auch teilweise bereits bearbeitete oder fertigbearbeitete Werkstückbereiche mittels der in die Mess-Lünette integrierten Messeinrichtung vermessen wird.

Vorzugsweise wird bei dem Verfahren die Mess-Lünette mit ihrem im Prisma angeordneten Stützteilen an den abzustützenden Werkstückbereich derart angestellt, dass dieser Werkstückbereich um einen bzgl. der Mittellängsachse des Wellenteils definierten Betrag überdrückt wird und danach die Mess-Lünette den Werkstückbereich auf dessen aktuellem Durchmesser abstützt. Das sogenannte Überdrücken des Werkstückbereiches bedeutet, dass durch die Lünette nicht nur eine reaktive Abstützkraft auf das zu bearbeitende Wellenteil aufgebracht wird, sondern dass zusätzlich eine aktive Druckkraft zum Herbeiführen einer bewussten Deformation der Längsachse des Bauteils im Sinne einer leichten Ausbiegung aus der Biegenulllinie erreicht wird.

Des Weiteren ist es vorzugsweise auch vorgesehen, dass die Mess-Lünette nach dem Vermessen des Werkstückbereiches um einen derartigen geringen Betrag auf ihrer CNC-Zustellachse (X_{L}-Zustellachse) zurückgezogen wird, dass die Mess-Lünette den Werkstückbereich auf dessen aktuellem Durchmesser abstützt, und zwar ohne Überdrückung.

Die Tatsache, ob die Mess-Lünette den Werkstückbereich überdrückt oder nicht, hängt letztlich auch davon ab, welches Maß die Messeinrichtung an der Rohkontor oder Zwischenkontur des Werkstückbereiches gemessen hat. Weiter vorzugsweise wird mit dem erfindungsgemäßen Verfahren die Mess-Lünette mittels einer Steuereinrichtung auf Basis von durch die Messeinrichtung ihr bereitgestellter Messsignale dem aktuellen Durchmesser des Werkstückbereiches bis auf dessen Fertigmaß nachgeführt. Dabei erfolgt eine laufende Messung des aktuellen Durchmessers, was eine In-Prozess-Messung ist.

Die Messung kann aber auch derart ausgeführt sein, dass während des Schleifens der Lagerstelle der Schleifvorschub angehalten wird und die Durchmesservermessung an der Lagerstelle erfolgt. Anschließend wird die Lagerstelle auf das durch die integrierte Messvorrichtung ermittelte Diferenzmaß bis auf Fertigmaß geschliffen. In bevorzugter Weise kann die Messung auch bei unterbrochenem Schleifvorschub und geringem Abhebebetrag der Schleifscheibe von der gerade zu schleifenden Lagerstelle erfolgen.

Um die Genauigkeit bei der Bearbeitung zu erhöhen, kann weiter vorzugsweise mittels der Steuereinrichtung auf die CNC-gesteuerte X-Zustellachse der Schleifscheibe eine zusätzliche Rundheitskorrektur auf die eigentlichen Zustellwerte der Schleifscheibe in der Art einer Überlagerung aufgeprägt werden. Damit ist es möglich, die Rundheit im Bearbeitungsergebnis weiter zu verbessern, wobei mit der in die Mess-Lünette integrierten Messeinrichtung durch die damit realisierte In-Prozess-Messung der jeweilige Bearbeitungsvorgang optimal überwacht und gesteuert werden kann.

Vorzugsweise wird in einer ersten Version die Mess-Lünette bei nicht rotierendem Wellenteil auf der CNC-Achse ihres Lünettenarmes (X_{L}-Zustellachse) soweit an den zu bearbeitenden Werkstückbereich herangefahren, dass die Messeinrichtung ein Messsignal des Durchmessers des Werkstückbereiches misst, und zwar ohne dass die Mess-Lünette den Werkstückbereich abstützt. Das gemessene Messsignal wird an die Steuereinrichtung übertragen. Es wird also bei dieser ersten Version die Messeinrichtung innerhalb der Mess-Lünette verwendet, um einen ersten Wert des Durchmessers insbesondere der Rohkontur des zentrischen Werkstückbereichs zu erhalten, ohne dass die Lünette überhaupt in Kontakt mit diesem Werkstückbereich ist.

Gemäß einer zweiten Variante wird vorzugsweise die Mess-Lünette bei rotierendem Wellenteil auf der CNC-Achse ihres Lünettenarmes mit moderater Zustellung soweit an den zu bearbeitenden Werkstückbereich herangefahren, dass der Werkstückbereich abgestützt wird, d. h. dass die Mess-Lünette in Kontakt mit dem Werkstückbereich ist, und sich das Messsignal der Messeinrichtung nicht mehr ändert. Anschließend wird das Messsignal an die Steuereinrichtung übertragen. Das heißt, die Übertragung des Messsignals an die Steuereinrichtung erfolgt erst dann, wenn sich das Messsignal der Messeinrichtung nicht mehr ändert. Bei dieser Version zeigt sich besonders deutlich, welche Vorteile sich ergeben, dass die Messeinrichtung in die Mess-Lünette integriert ist und die Messsignale der Messeinrichtung sofort für die Steuerung der Zustellung der Mess-Lünette Verwendung finden. Und schließlich wird vorzugsweise gemäß einer dritten Version die Mess-Lünette bei rotierendem Wellenteil auf der CNC-Achse ihres Lünettenarmes bis auf eine vorgegebene untere Toleranzgrenze des zu bearbeiteten Werkstückbereiches an diesen zugestellt. Die Messeinrichtung misst erst bei Erreichen dieser Anstellposition den Durchmesser des Werkstückbereiches und überträgt das diesem Durchmesser entsprechende Messsignal an die Steuereinrichtung.

Und schließlich wird vorzugsweise ein Verfahren bereitgestellt, bei welchem die Schritte nacheinander ausgeführt werden. Für bestimmte Anwendungsfälle ist das Nacheinanderausführen dieser jeweiligen Schritte besonders vorteilhaft, was insbesondere dann zum Tragen kommen kann, wenn eine relativ grobe Rohkontur des zu bearbeitenden Werkstückbereiches vorliegt.
Nachdem die Messwerte von der Messeinrichtung an die Maschinensteuerung übertragen worden sind, kann die Lünette auf den genauen Lagerdurchmesser an der Lagerstelle zugestellt werden.
Um eine verbesserte Anlage des zu messenden Durchmessers im Stützprisma zu erhalten, ist es in einer weiteren, bevorzugten Ausführungsform vorgesehen, dass die Lünette mit einem Schwenkhebel ausgestattet ist, der das Werkstück noch zusätzlich aktiv in das Stützprisma drückt.
Weitere Vorteile, Ausgestaltungen und Details der Erfindung werden nun anhand von Ausführungsbeispielen durch die nachfolgende Zeichnung beschrieben. In der Zeichnung zeigen:
- Figur 1:: einen prinzipiellen Aufbau einer Schleifmaschine mit einer angeordneten Zwei-Punkt-Lünette ohne dargestellte Messeinrichtung;
- Figur 2:: eine vergrößerte Detailansicht einer gerade geschliffenen Kurbelwelle mit erfindungsgemäßer Mess-Lünette in zurückgezogener (durchgezogene Linien) und abstützender Position (gestrichelte Linien);
- Figur 3:: eine dreidimensionale Ansicht der erfindungsgemäßen Mess-Lünette gemäß Figur 2;
- Figur 4:: eine prinzipielle Seitenansicht der erfindungsgemäßen Mess-Lünette in Anlage an dem zu bearbeitenden Werkstück bei zurückgezogener Schleifscheibe und angeschlossenem Regelkreis zur Justierung der Mess-Lünette;
- Figur 5:: eine prinzipielle Detaildarstellung der erfindungsgemäßen Mess-Lünette bei an den Werkstückbereich angefahrener Messeinrichtung, jedoch noch nicht an den Werkstückbereich angefahrenen Stützteilen der Mess-Lünette;
- Figur 6:: eine Detailansicht wie in Figur 5, jedoch mit an eine Rohkontur des Werkstückbereichs angefahrenen Stützteilen der Mess-Lünette;
- Figur 7:: eine zwischen Reitstock und Spindelstock eingespannte Kurbelwelle, welche an ihren Hauptlagern jeweils mit einer erfindungsgemäßen Mess-Lünette abgestützt ist; und
- Figur 8:: eine Kurbelwelle gemäß Figur 7, bei welcher aus Gründen der Übersichtlichkeit die jeweiligen Hauptlager zum Abstützen mit einer Mess-Lünette durch Pfeile gekennzeichnet sind.

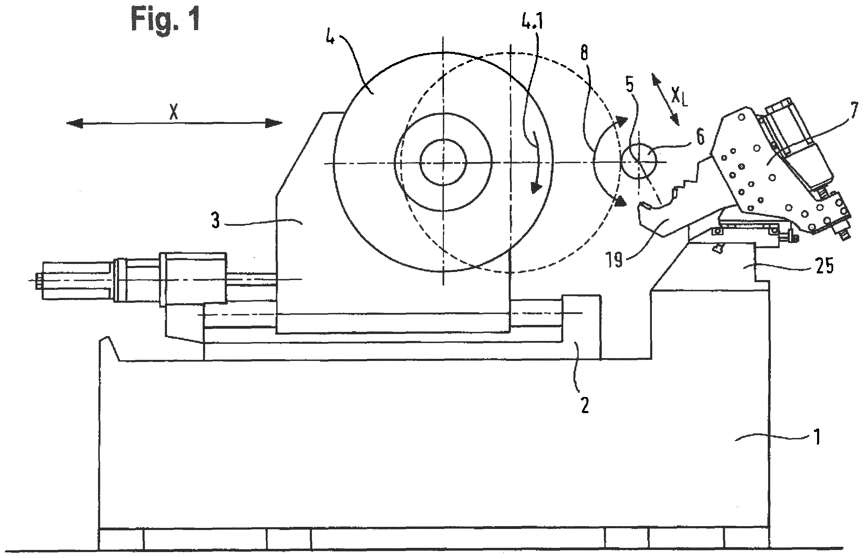

In Figur 1 ist in Seitenansicht der prinzipielle Aufbau einer Schleifmaschine mit einer Zwei-Punkt-Lünette in Form der erfindungsgemäßen Mess-Lünette dargestellt, bei welcher der Einfachheit der Darstellung wegen die Messeinrichtung nicht eingezeichnet ist. Ein Maschinenbett 1 trägt einen Kreuzschlitten 2 für eine CNC-gesteuerte Bewegung einer auf einem Schleifspindelstock 3 gelagerten Schleifscheibe 4 zu deren Zustellung an das zu schleifende, eine Mittellängsachse 5 aufweisende Werkstück 6. Das Werkstück 6 stellt ein Wellenteil dar, bei welchem sich die Mittellängsachse 5 auf den zu bearbeitenden Werkstückbereich 9 bezieht. Die Schleifscheibe 4 ist in durchgezogener Linie in zurückgezogener Position außer Eingriff vom zu schleifenden Wellenteil 6 gezeigt, wobei in ihrem Inneren in Form eines gekrümmten Pfeiles 4.1 die Drehrichtung der Schleifscheibe gezeigt ist. In gestrichelter Darstellung ist die Schleifscheibe 4 in Eingriff mit dem zu schleifenden Wellenteil 6 gezeigt.

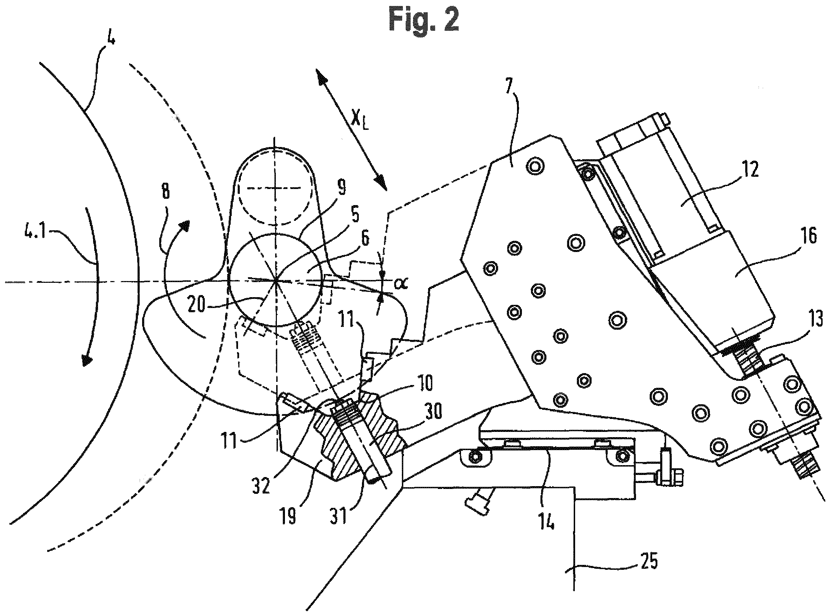

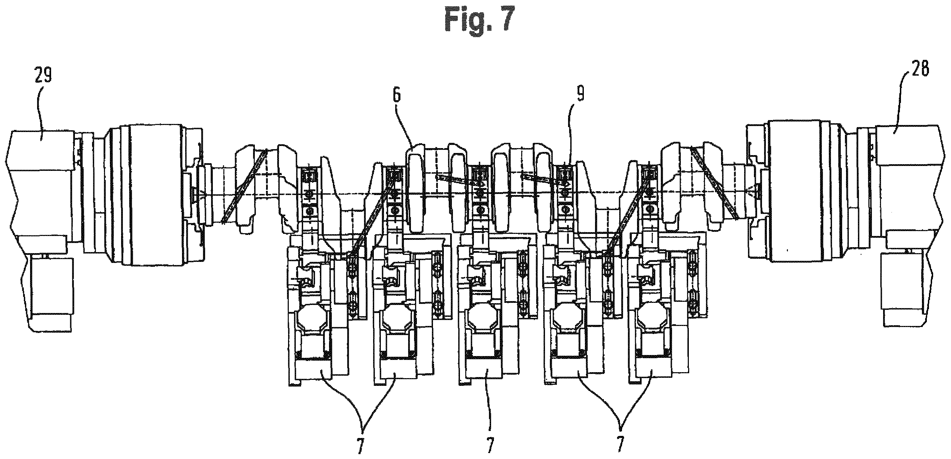

Der Schleifspindelstock 3 ist in an sich bekannter Weise in Kreuzschlittenbauweise ausgeführt, wodurch es möglich ist, dass dieser mit der Schleifscheibe 4 parallel zur Längsmittelachse 5 des zu schleifenden zentrischen Werkstückbereiches 9 des Werkstückes 6, d. h. dessen Rotationsachse, und rechtwinklig zu dieser Mittellängsachse 5 zugestellt werden kann. Die Zustellung erfolgt über die X-Achse. Der nicht dargestellte Werkstückspindelstock ist im vorderen Bereich der Schleifmaschine auf dem Maschinenbett 1 auf einem Schleiftisch 25 gelagert, welcher auch den durch den gekrümmten Pfeil dargestellten Werkstückantrieb 8 für das Werkstück, einen Reitstock 28 (siehe Figur 7) und eine erfindungsgemäße Mess-Lünette 7 zur Abstützung des Werkstückes an einer Lagerstelle und zu dessen direkter Vermessung aufnimmt. Unter direkter Vermessung ist dabei zu verstehen, dass die in die Mess-Lünette 7 integrierte Messeinrichtung 30 (siehe Figur 2) mit ihrem Taststift direkt in Kontakt mit der Oberfläche des zu vermessenden Werkstückbereiches 9 gebracht wird und somit direkt ein entsprechendes Messsignal an der Oberfläche des Werkstückbereiches 9 aufnimmt. In Figur 1 ist die Mess-Lünette in einer Position bezüglich des Werkstückes 6 gezeigt, in welcher das Werkstück nicht abgestützt wird. In der Regel wird die Mess-Lünette zum Abstützen und zum Vermessen in Kontakt mit dem Werkstück 6 gebracht, wenn die Schleifscheibe - wie in Figur 1 in gestrichelter Darstellung gezeigt - zum Schleifen in Eingriff mit dem Werkstück ist. Wenn die Mess-Lünette mit ihren Stützteilen zur Realisierung ihrer Zwei-Punkt-Abstützung untermittig zum Abstützen und Vermessen des Werkstückbereiches an diesen angefahren ist, drückt die Schleifscheibe durch die Drehrichtung 4.1 das Werkstück lagezentrierend in das Prisma der Lünette. Die Mess-Lünette 7, welche einen Lünettenarm 19 aufweist, an welchem die eigentliche prismenartige Ausbildung der Mess-Lünette angeordnet ist, wird auf einer CNC-gesteuerten Zustellachse bewegt. Diese CNC-gesteuerte Zustellachse ist mit X_{L} in Figur 1 bezeichnet.

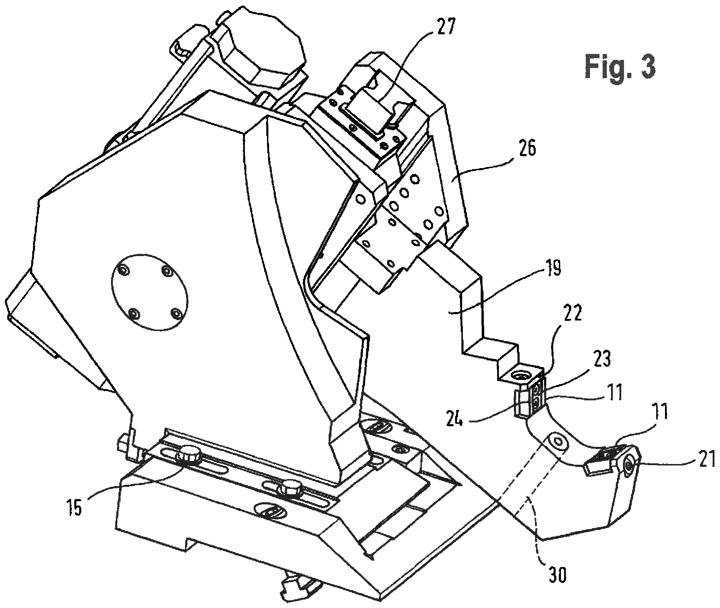

In Figur 2 ist in vergrößerter Darstellung eine Detailansicht der Schleifmaschine gemäß Figur 1 gezeigt, in welcher die Schleifscheibe 4 mit ihrer Drehrichtung 4.1 aus ihrer zurückgezogenen Position (durchgezogene Linie) zum Schleifen in ihre Eingriffsposition (gestrichelte Linie) mit dem Werkstück 6 in Form eines Hauptlagers einer Kurbelwelle zugestellt ist. Die Mittellängsachse 5 des zentrischen Lagerzapfens des Werkstückes 6 verläuft parallel zur Rotationsachse der Schleifscheibe 4. Auf dem Schleiftisch 25 ist die Mess-Lünette 7 angebracht. Die Mess-Lünette 7 weist an ihrem Lünettenarm 19 eine Ausnehmung auf, welche als Prisma mit an dessen Seitenflanken 22 (siehe Figur 3) angebrachten Stützteilen 11 ausgebildet ist. Die Mess-Lünette 7 ist auf dem Schleiftisch 25 derart angeordnet, dass die durch die Stützteile 11 bei ihrem an der Lagerstelle 9 anliegenden Kontakt gebildeten Stützlinien 20 (siehe gestrichelte Darstellung der Mess-Lünette 7) mit ihrem in der Figur dargestellten rechten Stützteil 11 unter einem Winkel α von ca. 7° unter der Werkstückmitte angeordnet sind. Das bedeutet, dass das Stützprisma der Mess-Lünette 7 in seiner Eingriffsposition mit dem abzustützenden Werkstück 6 insgesamt bezüglich der Mittellängsachse 5 des Werkstückes und der Schleifscheibenrotationsachse, welche auf einer Ebene liegen, untermittig angeordnet ist. Der Winkel α von ca. 7° hat sich beim Schleifen als vorteilhaft erwiesen, da der abzustützende Werkstückbereich 9 nie 100 %ig exakt rund ist. Durch diese untermittige Anordnung der unmittelbaren Abstützung des zu schleifenden Werkstückbereiches 9 werden die Rundheitsfehler an dieser Lagerstelle während des Schleifens nicht fortlaufend auf die zu schleifende Lagestelle wieder abgebildet, wie das bei einer Abstützung vis-a-vis zum Eingriff der Schleifscheibe im Stand der Technik der Fall ist, d. h. wenn die Abstützung der Lagerstelle bezüglich der Winkelhalbierenden zwischen den beiden Stützteilen auf derselben Ebene von Rotationsachse der Schleifscheibe und Mittellängsachse 5 des Werkstückes liegt.

Die Mess-Lünette 7 wird auf ihrer CNC-gesteuerten Zustellachse (X_{L}-Achse) zwischen ihrer zurückgezogenen Position (durchgezogene Linie) und ihrer Eingriffsposition (gestrichelte Linien) bewegt. Die Bewegung des Lünettenarmes 19 mit an den Seitenflanken 22 des Prismas 10 angeordneten Stützteilen 11 weist im Bereich des Grundes des Prismas eine Messvorrichtung 30 auf, deren Taststift 32 längs der Winkelhalbierenden, welche zwischen den Seitenflanken 20 des Prismas 10 ausgebildet ist, mit deren Längsachse 31 relativ zur Bewegung der Mess-Lünette bzw. dessen Lünettenarmes 19 bewegbar ist. Ein Taststift 32 ist dafür vorgesehen, sich direkt an die Oberfläche des zu vermessenden Werkstückbereiches 9 anzulegen, so dass sowohl bei an den Werkstückbereich angelegtem Prisma als auch bei noch nicht an den Werkstückbereich 9 angelegtem Prisma die Messeinrichtung 30 den Durchmesser des zu vermessenden Werkstückbereiches messen kann und ein entsprechendes Messsignal ermittelt.

Für die verschiedenen Varianten und Einsatzfälle des Messprismas ist es erforderlich, dass dieses stabil und steif genug ausgeführt ist, damit die entsprechend hohen Stützkräfte von der Zwei-Punkt-Lünette aufgenommen werden können. Überraschenderweise hat sich nun gezeigt, dass die demgegenüber recht empfindliche Messeinrichtung 30 dennoch unmittelbar im Bereich der Mess-Lünette angeordnet bzw. in diese integriert werden kann, ohne dass die großen Stützkräfte die Messeinrichtung negativ beeinflussen. Eine Anordnung im Bereich des Grundes des Prismas der Mess-Lünette sichert einen gewissen Schutz der empfindlichen Messeinrichtung und ermöglicht dennoch ein direktes Messen der Durchmesserwerte des zu schleifenden oder geschliffenen Werkstückbereiches, so dass mit einer derartigen Mess-Lünette eine zuverlässige Abstützung erreicht werden kann, und dennoch eine In-Prozess-Messung möglich ist. Darüber hinaus sichert die Zwei-Punkt-Lünette in überraschender Weise, dass mit einer derartigen Anordnung des Prismas Lagerstellen mit Rundheitsfehlern von zum Teil deutlich weniger als 1 µm geschliffen werden können. Diese geringen Rundheitsfehler sind u. a. auch deshalb erreichbar, weil die Mess-Lünette einerseits eine hohe Steifigkeit und andererseits den Vorteil ihrer Bewegung auf einer ebenfalls CNC-gesteuerten Zustellachse, der X_{L}-Achse, aufweist. Dadurch nämlich kann der Lünettenarm 19 mit dem Prisma 10 bzw. der prismenartigen Abstützung und den eigentlichen Stützteilen unter definierten Bedingungen auf einem definierten Bewegungsweg an den abzustützenden Werkstückbereich 9 zugestellt werden. Mittels der durch eine Gewindespindel 13 realisierten Zustellung der Lünette an den abzustützenden Werkstückbereich exakt entlang der Winkelhalbierenden ist sichergestellt, dass die Mitte des Werkstückbereichs 9 in Richtung der Zustellachse der Schleifscheibe 4 definiert gehalten wird. Die Bewegung des Stützprismas 10 entlang der CNC-gesteuerten X_{L}-Achse auf der Winkelhalbierenden wird mittels eines Servomotors 12 gewährleistet, welcher über eine in einem Gehäuse angeordnete, nicht gezeigte Kupplung auf die zum Zustellen des Stützprismas 10 aus der zurückgezogenen Position in die abstützende Position vorgesehenen Gewindespindel 13, vorzugsweise in der Art einer Kugelumlaufspindel, wirkt. Die Mess-Lünette ist auf dem Schleiftisch 25 mittels eines Halters befestigt, welcher eine Schwalbenschwanzführung 14 aufweist. Die an den Seitenflanken 20 des Prismas 10 angeordneten Stützteile 11 sind als CBN- oder PKD-beschichtete Platten ausgebildet, welche mit dem Werkstückbereich 9 des Werkstückes 6 in der abstützenden Position der Mess-Lünette 7 in direktem Kontakt sind. Das bedeutet, dass die Werkstückbereiche 9 des Werkstückes 6 auf diesen Stützteilen 11 theoretisch in einem Linienkontakt gleiten. Der Vorteil der genannten Werkstoffe für die Stützteile besteht darin, dass diese eine hohe Verschleißfestigkeit aufweisen.

In Figur 3 ist eine dreidimensionale Darstellung der relativ kompakten Baueinheit der Mess-Lünette gezeigt. Die Mess-Lünette ist mittels Klemmschrauben 15 auf dem nicht dargestellten Schleiftisch 25 befestigt. Der Lünettenarm 19 ist längs der X_{L}-Zustellachse der Mess-Lünette an den zu messenden Werkstückbereich 9 längs einer Führungsschiene 27 mittels eines Führungswagens 26 verstellbar. In Figur 3 ist gemäß diesem Ausführungsbeispiel die als Prisma 10 ausgebildete eigentliche Mess-Lünette gezeigt, welches Seitenflanken 22 aufweist, an welchen Stützteile 11 jeweils angebracht sind, wobei die Mess-Lünette V-förmig ausgebildet ist und im Bodenbereich bzw. Grund des Prismas 10 die Messeinrichtung 30 zeigt. Diese prinzipielle Darstellung in Figur 3 verdeutlicht, dass die Anordnung der Messeinrichtung 30 im Grund des Stützprismas eine relativ geschützte Position für die empfindliche Messeinrichtung 30 darstellt.

Bei diesem Ausführungsbeispiel sind die Stützteile 11 im Detail dargestellt. Ersichtlich ist, dass die Stützteile 11 über die Oberfläche der Seitenflanken 22 des Prismas 10 hinausragen, und zwar in Richtung in das Innere des Prismas, damit die Stützteile 11 beim Anlegen an das zu stützende, gerade zu schleifende Werkstück 6 mittels eines Linienkontaktes an den Stützlinien 20 den entsprechenden abstützenden Kontakt gewährleisten können. Die Stützteile 11 sind lösbar auf einem Schwenkbolzen befestigt, welcher eine Pendelbewegung des jeweiligen Stützteils 11 um eine Pendelachse 21 bzw. Schwenkachse gewährleistet. Der Vorteil einer derartigen pendelnden Aufnahme der Stützteile 11 besteht darin, dass gegebenenfalls nicht exakt oder bewusst nicht zylindrisch ausgebildete abzustützende Werkstückbereiche 9 eine stets gleichbleibende zuverlässige und genau definierte Anlage des jeweiligen Stützteils 11 an diese abzustützende Lagerstelle, d. h. an deren Oberfläche, gewährleisten. Durch diese pendelnde Lagerung der Stützteile 11 wird verhindert, dass bei gewissen Abweichungen der abzustützenden Lageroberfläche von einer exakt zylindrischen Form eine Kante oder die Kanten des Stützteiles 11 sich in die Oberfläche des abzustützenden Werkstückes sozusagen eingräbt bzw. eingraben. Die Stützteile weisen zwei Stützbereiche auf, welche an den Seiten des plättchenförmig ausgebildeten Stützteiles 11 angeordnet und durch eine sogenannte Mittelnut 23 voneinander getrennt sind. Der Vorteil einer derartigen Ausbildung besteht darin, dass durch die Mittelnut 23 für jedes Stützteil 11 zwei separate Stützbereiche bzw. Stützabschnitte 24 ausgebildet werden, welche ein zuverlässiges Abstützen gewährleisten, aber gleichzeitig nur einen kurzen Linienkontakt ausbilden, sodass die Auswirkungen des Anlegens der Lünette an einen bereits geschliffenen Bereich eines Werkstückbereiches 9 weiter reduziert werden.

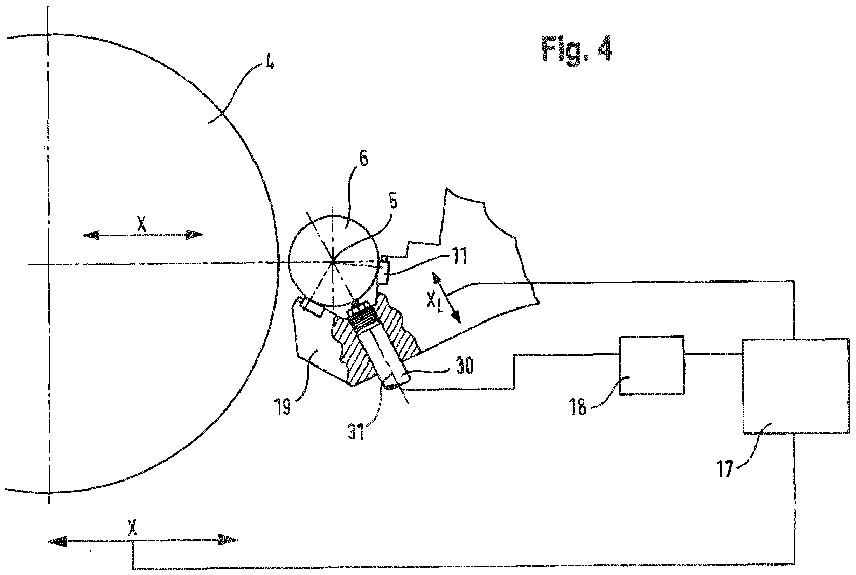

In Figur 4 ist bei zurückgezogener Schleifscheibe 4 eine an den zentrischen Werkstückbereich 9 des Werkstückes 6 angestellte, diesen abstützende Mess-Lünette gezeigt, bei welcher gleichzeitig die Messeinrichtung 30, deren Taststift vorteilhafterweise federbelastet ist, mit ihrem Taststift 32 die Oberfläche des Werkstückes 6 vermessend abtastet. Die Zustellachse der Schleifscheibe 4 ist durch die durch den Doppelbefall dargestellte X-Achse dargestellt, während die CNC-Zustellachse der Mess-Lünette durch den durch X_{L} dargestellten Doppelpfeil gekennzeichnet ist.

In Figur 4 sind nun ein Messrechner 18 und eine Steuereinrichtung 17 eingezeichnet, mittels welcher ein Regelkreis gebildet ist, mittels welchem eine Mess-Lünetten-Justierung ermöglicht wird. Die Zustellachse der Mess-Lünette X_{L} und die Zustellachse der Schleifscheibe X sind beide CNC-gesteuert. Dadurch ist sichergestellt, dass diese beiden CNC-Zustellachsen in Abhängigkeit voneinander verfahren werden können. Durch diese Abhängigkeit voneinander ist es möglich, die beiden in exakt vorgeschriebener und definierter und beabsichtigter Abhängigkeit voneinander zu verfahren. Soll nämlich die Genauigkeit des Bearbeitungsergebnisses noch weiter erhöht werden, so kann dies beispielsweise zusätzlich durch das mit dem Abstützen zeitgleich realisierte Messen an dem zentrischen Werkstückbereich 9 des Werkstückes 6 dazu verwendet werden, dass die Genauigkeit der Nachführung der Mess-Lünette zu der Zustellung der Schleifscheibe 4 nochmals verbessert wird. Damit ist mit der erfindungsgemäßen Mess-Lünette 7 und den damit auf der erfindungsgemäßen Schleifmaschine realisierten Verfahren eine Vermessung des Rohdurchmessers des zentrischen Werkstückbereiches 9 vor seinem Abstützen sowie ein Vermessen während des Schleifens und ein Vermessen ebenso des fertigen Lagerdurchmessers möglich.

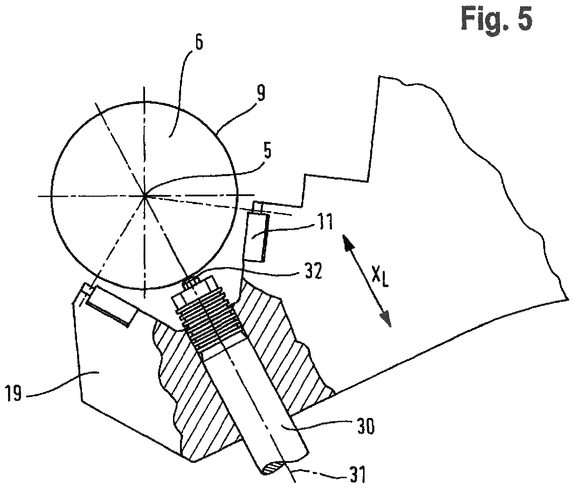

In Figur 5 ist eine gegenüber der Oberfläche des Werkstückbereiches 9 des Werkstückes 6 zurückgezogene Position des Stützprismas gezeigt, wobei jedoch der Taststift 32 der Messeinrichtung 30 in Kontakt mit der zu vermessenden Oberfläche des Werkstückes 6 ist. Wie bereits dargestellt, wird die Mess-Lünette entlang der Zustellachse X_{L} entlang der Winkelhalbierenden durch die Mittellängsachse 5 des Werkstückes 6 bewegt, auf welcher die Längsachse 31 der Messeinrichtung 30 mit ihrem Taststift 32 fluchtet. Die in Figur 5 dargestellte Position der Mess-Lünette stellt eine vereinfachte Lösung der Vermessung derartiger zentrischer Lagerstellen dar, nämlich solche, bei welcher der Taststift 32 der Messeinrichtung 30 an der Oberfläche des Werkstückes 6 anliegt, ohne dass die Stützteile des Prismas am zu messenden Durchmesser des Werkstückes anliegen. Es handelt sich dabei vorzugsweise um den Rohdurchmesser des Werkstückes an dieser zentrischen Lagerstelle. Eine derartige Vermessung vor einem Anliegen und Abstützen der Stützteile der Mess-Lünette am Werkstück 6 hat den Vorteil, dass eine Vermessung des Rohteildurchmessers des Werkstückbereiches rascher durchgeführt werden kann, wobei jedoch die Ungenauigkeiten am Werkstück 6, weiche aus der Durchbiegung der Welle und gegebenenfalls auch von Wärmegängen aus der Maschine resultieren, bewusst nicht erfasst werden. Eine Messung des Rohdurchmessers vor dem unmittelbaren Abstützen hat den Vorteil, dass bei nachfolgenden Schritten des Abstützens die entsprechenden Anstellkräfte und Abstützkräfte der Mess-Lünette 7 an dem zu schleifenden Werkstückbereich 9 optimal eingestellt werden können, wobei die Mess-Lünette 7 ebenfalls optimal dem Schleiffortschritt nachgeführt werden kann.

Gemäß der gezeigten Positionen von Messeirichtung 30 und eigentlicher Position der Mess-Lünette gemäß Figur 5 ist es jedoch auch möglich, dass - wie in Figur 5 dargestellt - die Messeinrichtung 30 mit ihrem Taststift 32 zunächst an die Oberfläche des Werkstückes 6 herangefahren wird und anschließend die eigentliche Lünette, d. h. das Prisma mit den Stützteilen 11 entlang der X_{L}-Achse der Mess-Lünette so lange an die Lagerstelle zugestellt wird, bis sich der mit der Messeinrichtung 30 ermittelte Messwert nicht mehr verändert. Dies ist dann sichergestellt, wenn die beiden Stützteile 11 des Prismas 10 am Werkstück 6 anliegen. Dadurch kann wieder der genaue Durchmesser der Lagerstelle gemessen werden. Nach diesem verbesserten Verfahren ist es wiederum möglich, die Zustellachse X_{L} der Mess-Lünette 7 auf einen genauen Sollwert einzustellen. Mit einer derartigen Lösung ist es somit möglich, die Fehler auch aus Wärmegängen der Maschine und aus der Durchbiegung des Werkstückes infolge Eigengewichtes zu beseitigen oder zumindest teilweise zu kompensieren. Bei der in Figur 5 gezeigten Variante mit allmählichem Heranfahren der Mess-Lünette 7 an die abzustützende Oberfläche wird jedenfalls ohne Überdrückung des Werkstückbereiches 9 gearbeitet, um den Istwert des Lagerdurchmessers zu vermessen.

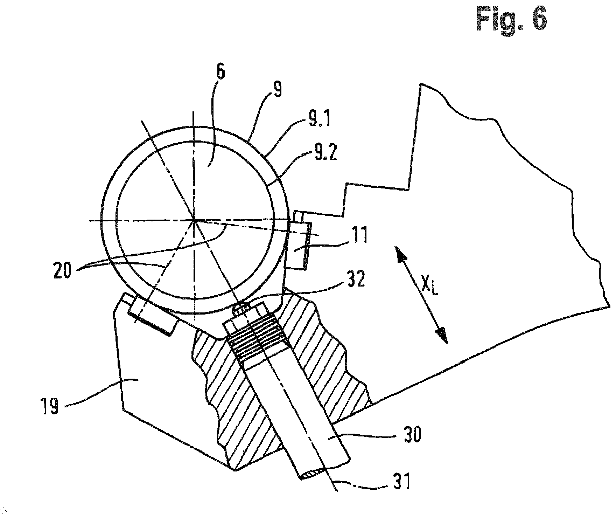

In Figur 6 ist eine Position der Mess-Lünette dargestellt, bei welcher die Stützteile 11 des Prismas 10 der Mess-Lünette 7 sowie auch die Messeinrichtung 30 mit ihrem Taststift 32 an einer Rohkontur 9.1 des Werkstückbereiches 9 des Werkstückes 6 anliegen. Wiederum gezeigt ist, dass die Mess-Lünette 7 entlang der Winkelhalbierenden durch die Mittellängsachse 5 des zentrischen Werkstückbereiches 9 verläuft, wobei die relative Bewegung des Taststifts 32 der Messeinrichtung 30 hinsichtlich der Längsachse 31 mit der Winkelhalbierenden fluchtet.

Prinzipiell hat eine prismenartig ausgebildete Lünette den "Nachteil", dass sie nicht selbstzentrierend ist, d. h. dass sie sich nicht automatisch an den Durchmesser der Lagerstelle anpasst. Um dennoch möglichst genaue Lagerdurchmesser herzustellen, ist es erforderlich, dass der Lagerdurchmesser beim Anstellen der Lünette vermessen wird. Dazu dient nun die in Figur 6 dargestellte Position. Die Mess-Lünette 7 wird hierbei zunächst an den zentrischen Werkstückbereich 9, d. h. die Lagerstelle auf das theoretische Maß angestellt. Um sicherzustellen, dass beide Stützteile 11 sicher an der Oberfläche der Rohkontur 9.1 des Werkstückbereiches 9 des Werkstückes 6 anliegen, wird die Lünette mit einer derartigen Kraft an diesen zu bearbeitenden und abzustützenden Werkstückbereich 9 angestellt, dass dieser Bereich um einen definierten Betrag "überdrückt" wird, wodurch das Werkstück um eben diesen geringen Betrag durch die Mess-Lünette in Richtung der Zustellung des Prismas 10 der Mess-Lünette durchgebogen wird. Dadurch liegen die beiden Stützteile des Prismas 10 der Mess-Lünette 7 sowie der Taststift 32 der Messeinrichtung 30 prozesssicher an dem Werkstückbereich 9 an, wodurch der genaue Durchmesser dieses Werkstückbereiches 9 gemessen werden kann. Nachdem der Durchmesser des zentrischen Werkstückbereiches 9 genau vermessen ist, wird anschließend die Mess-Lünette 7 entlang ihrer Zustellachse X_{L} wieder etwas zurückgezogen, d. h. sie wird auf den aktuellen Werkstückdurchmesser des zentrischen Werkstückbereiches 9 zugestellt. Damit eben eine derartig genaue Zustellung der Mess-Lünette realisiert werden kann, ist deren Zustellachse X_{L} als CNC-gesteuerte Achse ausgebildet.

Nachdem der tatsächliche Durchmesser (Rohteildurchmesser) des Werkstückes 6 an dem Werkstückbereich 9 nun genau ermittelt worden ist, wird die Mess-Lünette 7 auf ihre exakte vorgegebene gewünschte Abstützposition zugestellt. Dies wird durch die Zustellung über die CNC-gesteuerte X_{L}-Achse realisiert, wobei die CNC-gesteuerten Achsen der Mess-Lünette 7 und der Schleifscheibe jeweils mit einem Lageregelkreis versehen sind. Ein Nachführen der Mess-Lünette erfolgt dann bis zum Fertigmaß 9.1.

Wenn beispielsweise wie bei einer Kurbelwelle mehrere Hauptlagerstellen, d. h. zentrische Werkstückbereiche vorhanden sind, kann nach dem Ausmessen des Lagerdurchmessers jede einzelne Mess-Lünette entsprechend angestellt werden. Bei diesem Vorgehen, d. h. mit diesem Verfahren zur Messung des Rohteil-Lagerdurchmessers, können auch Abweichungen aus Rundlauffehlern aus der Vorbearbeitung und der Durchbiegung des eingespannten Werkstückes infolge Eigengewichtes kompensiert werden.

Die Darstellungen gemäß Figur 5 und gemäß Figur 6 erlauben dem Grunde nach drei unterschiedliche Varianten, welche nachfolgend anhand eines konkreten Beispiels erläutert werden soll. Beispielhaft sei der zu schleifende Lagerdurchmesser ein Durchmesser von 100 mm. Das Rohteilaufmaß bzw. Aufmaß aus einer Vorbearbeitung soll beispielhaft 0,5 mm betragen. Als Toleranz sei ± 0,1 mm angenommen. Damit ist das obere Toleranzmaß 100,6 mm und das untere Toleranzmaß 100,4 mm . Bei Beginn des Prozesses muss beachtet werden, dass beim Anstellen der Mess-Lünette an ein Rohmaß einer zu vermessenden und abzustützenden Lagerstelle deren Durchmesser noch unbekannt ist. Es wäre damit möglich, dass an einigen zentrischen Lagerstellen überdrückt wird, während an anderen Lagerstellen überhaupt keine stützende Berührung der Mess-Lünette stattfindet, wenn eine Zustellung auf Basis eines theoretischen Wertes vorgenommen wird. Jedenfalls ist zu beachten, dass bei Vorhandensein von mehreren zentrischen Lagerstellen und dem Einsatz von entsprechend der Anzahl von Lagerstellen vorhandenen Mess-Lünetten jede Lünette bei ihrem ersten Anfahren an die abzustützende Lagerstelle an einen gemessenen Durchmesser ungenau heranfährt.

Gemäß einer ersten Variante, bei welcher die Rundheit als Fehler zugelassen wird und auch die Durchbiegung und der Wärmegang in der Maschine unberücksichtigt bleiben, jedoch als Anhaltswert ein entsprechender Rohdurchmesser vermessen wird, ist in Figur 5 dargestellt, dass nämlich ohne jegliche Abstützung durch die Mess-Lünette die Messeinrichtung 30 eine Messung des Rohdurchmessers 9.1 durchführt. Damit kann ein geeigneter Bezugsdurchmesser gewonnen werden.

Gemäß einer zweiten Variante erfolgt auf dieser Basis bei angestelltem Taststift 32 der Messeinrichtung 30 ein langsames Zustellen der Mess-Lünette 7, und zwar bis die Stützteile 11 an der Rohkontur 9.1 des Werkstückes 6 an dem Werkstückbereich 9 anliegen und der Messwert sich nicht mehr ändert. Diese Position ist in Figur 6 dargestellt.

Und schließlich gibt es die dritte Variante, bei welcher kein vorheriges Messen ohne eine Abstützung erfolgt, bei der viel mehr sofort die Mess-Lünette 7 auf das Basis der Toleranz zum Aufmaß sofort auf das Kleinstmaß angefahren wird. Damit wird sichergestellt, dass jede Mess-Lünette 7 zumindest in abstützender Wirkung an der jeweiligen Abstützstelle ist, wenn auch an einigen Stellen durchaus eine geringfügige Überdrückung vorhanden sein kann. Das bedeutet, dass lediglich an den zentrischen Werkstückbereichen, an denen gerade das Kleinstmaß, d. h. das untere Toleranzmaß, eingehalten ist, keine Überdrückung vorliegt. An allen anderen abzustützenden zentrischen Werkstückbereichen liegt ein entsprechend dem tatsächlichen Maß, mit welchem das Kleinstmaß überschritten wird, ein mehr oder weniger starkes Überdrücken vor.

In Figur 7 schließlich ist ein zwischen einem Werkstückspindelstock 29 und einem Reitstock 28 eingespanntes Werkstück 6 in Form einer Kurbelwelle mit zentrischen Werkstückbereichen 9 dargestellt, an welche jeweils eine Mess-Lünette 7 angestellt ist. D. h. an allen fünf Lagerstellen sind Mess-Lünetten 7 angestellt. Je nach Ausführung der Kurbelwelle oder eines anderen Werkstückes wird eine davon abweichende Anzahl von Mess-Lünetten 7 gegebenenfalls erforderlich sein. Es ist jedoch auch denkbar, bei entsprechend stabileren Werkstücken oder stabileren Kurbelwellen, dass möglicherweise nur die Mess-Lünetten 1, 3, 5 zum Einsatz kommen, gezählt von links nach rechts in Figur 7. In bekannter Weise ist das Werkstück werkstückspindelstockseitig und reitstockseitig jeweils auf Spitzen aufgenommen und zur Radialmitnahme beidseitig mit einer C-Achse angetrieben.

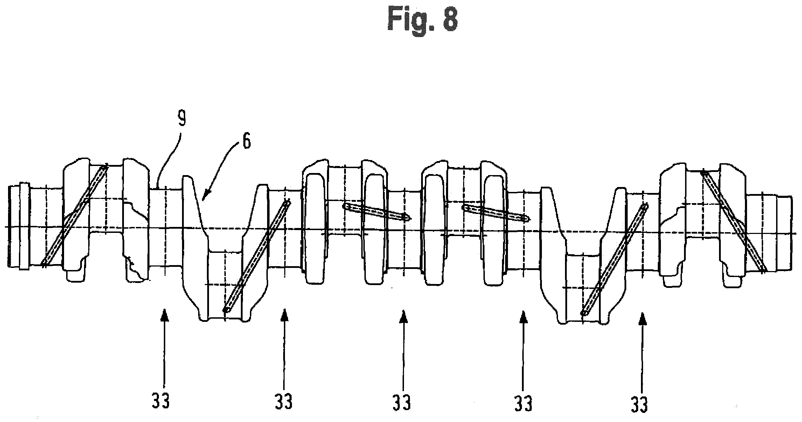

Und schließlich ist in Figur 8 eine Kurbelwelle 6 dargestellt, bei welcher die Hauptlager 33 lediglich durch Pfeile dargestellt sind. Von links beginnend sind Lünetten vorgesehen, und zwar an den Hauptlagern 2 bis 6, wobei die Zustellung an die Rohteildurchmesser vorgenommen werden kann. Generell ist davon auszugehen, dass sowohl die Rohteildurchmesser als auch Durchmesser aus gegebenenfalls vorhandener Vorbearbeitung unterschiedlich sind, da es nicht möglich ist, diese exakt auf ein und dasselbe Sollmaß zu fertigen. Da jede Lagerstelle in der Regel ein von der anderen abweichendes Istmaß aufweist und davon auszugehen ist, dass dieses Istmaß innerhalb der zulässigen Fertigungstoleranz liegt, so bedeutet dies, dass das zuvor beschriebene Ausmessen der jeweiligen Lagerstelle und Abstützen an jedem zentrischen Werkstückbereich durch die jeweilige Mess-Lünette 7 erfolgen muss, um hochgenaue Lagerstellen herzustellen.

### Bezugszeichenliste

- 1: Maschinenbett
- 2: Kreuzschlitten
- 3: Schleifspindelstock
- 4: Schleifscheibe
- 4.1: Drehrichtung Schleifscheibe
- 5: Mittellängsachse des Werkstückbereiches
- 6: Werkstück / Wellenteil
- 7: Mess-Lünette
- 8: Werkstückantrieb
- 9: Werkstückbereich
- 9.1: Rohkontur
- 9.2: Fertigkontur
- 10: Prisma / prismaartige Abstützung / Stützprisma
- 11: Stützteile
- 12: Stellmotor
- 13: Gewindespindel
- 14: Schwalbenschwanzführung
- 15: Klemmschrauben
- 16: Gehäuse
- 17: Steuereinrichtung
- 18: Messrechner
- 19: Lünettenarm
- 20: Stützlinien
- 21: Pendelachse
- 22: Seitenflanken des Prismas
- 23: Mittelnut
- 24: Stützabschnitt
- 25: Schleiftisch
- 26: Führungswagen
- 27: Führungsschiene
- 28: Reitstock
- 29: Werkstückspindelstock
- 30: Messeinrichtung
- 31: Längsachse Messeinrichtung
- 32: Taststift
- X_{L}: Zustellachse Mess-Lünette
- X: Zustellachse
- 33: Hauptlager

## Patentansprüche

1. Mess-Lünette (7) zum Abstützen und Vermessen von zentrischen Werkstückbereichen (9), insbesondere Lagerstellen an Wellenteilen (6), insbesondere Kurbelwellen, mit integrierter Messeinrichtung (30) zum direkten Anstellen an die und Vermessen der zentrischen Werkstückbereiche (9) vor und/oder während der Bearbeitung von zentrischen und/oder exzentrischen Werkstückbereichen (9), welche zum Schleifen aus einer zurückgezogenen Position und zum Abstützen des zentrischen Werkstückbereiches (9) in eine Abstützposition an den zentrischen Werkstückbereich (9) bringbar ist und zumindest zwei an den zentrischen Werkstückbereich (9) zustellbare Stützteile (11) aufweist, welche den zentrischen Werkstückbereich (9) an jeweiligen voneinander beabstandeten Umfangsbereichen abstützen,
**dadurch gekennzeichnet,**
**dass** die Stützteile (11) unter Bildung eines Öffnungswinkels zueinander an je einer Seitenflanke (22) eines gabelartig sich öffnenden Prismas (10) an einem Lünettenarm (19) in fester Position zueinander und zum Lünettenarm (19) und in der Abstützposition untermittig zur Längsachse (5) des zentrischen Werkstückbereiches (9) derart angeordnet sind, dass eine zwischen beiden Stützteilen (11) gebildete Winkelhalbierende einen festen spitzen Winkel zur durch die Längsachse (5) des zentrischen Werkstückbereiches (9) verlaufenden Senkrechten aufweist und eine CNC-gesteuerte Zustellung des Lünettenarmes (19) an den zentrischen Werkstückbereich (9) entlang dieser Winkelhalbierenden erfolgt, auf welcher die Messeinrichtung (30) bezüglich ihrer Längsachse (31) angeordnet ist.

2. Mess-Lünette (7) nach Anspruch 1, bei welcher der Lünettenarm (19) mittels nur eines auf eine Gewindespindel (13) arbeitenden Stellmotors (12) zwischen der zurückgezogenen und der Abstützposition bewegbar ist.

3. Mess-Lünette (7) nach Anspruch 1 oder 2, bei welcher die Messeinrichtung (30) unabhängig von der CNC-gesteuerten Zustellung des Lünettenarmes (19) bewegbar ist, insbesondere einen Taststift (32) aufweist, welcher entsprechend seinem Kontakt mit dem zu vermessenden zentrischen Werkstückbereich (9) in der Längsachse (31) der Messeinrichtung (30) zur Aufnahme eines Messwertes auf der Winkelhalbierenden relativ zu der CNC-gesteuerten Zustellung beweglich angeordnet ist.

4. Schleifmaschine zum Schleifen von zentrischen und/oder exzentrischen Werkstückbereichen (9) an Werkstücken (6), insbesondere Lagerstellen von insbesondere Kurbelwellen, mit einer Mess-Lünette (7) mit den Merkmalen gemäß einem der Ansprüche 1 bis 3 und mit einer Steuervorrichtung, mittels welcher vor und/oder während des mittels einer Schleifscheibe (4) erfolgenden Schleifens oder nach dem erfolgten Schleifen eines zentrischen Werkstückbereiches (9) die Mess-Lünette (7) an einen zentrischen Werkstückbereich anstellbar und die Schleifscheibe (4) bis zum Fertigmaß des zentrischen Werkstückbereiches (9) mittels ihrer CNC-Steuerung zustellbar sind, wobei die Mess-Lünette (7) als Stützprisma (10) und so ausgebildet ist, dass ihre ebenfalls CNC-gesteuerte Zustellbewegung auf den abzustützenden zentrischen Werkstückbereich (9) entlang der Winkelhalbierenden des Öffnungswinkels des Stütprismas (1 Ü) erfolgt, auf welcher eine Messeinrichtung (30) angeordnet ist, welche bezüglich ihrer Längsachse (31) mit der Winkelhalbierenden fluchtet.

5. Schleifmaschine nach Anspruch 4, welche eine Messvorrichtung aufweist, welche Messsignale des Durchmessers des zentrischen Werkstückbereiches (9) für die Zustellposition der Mess-Lünette (7) an der Lagerstelle an die Steuereinrichtung übermittelt, auf Basis welcher Messsignale die Zustellpositionen der Mess-Lünette (7) gesteuert werden.

6. Schleifmaschine nach Anspruch 4 oder 5, bei welcher die Steuereinrichtung auf Basis der Messsignale die X-Achsen-Position der Schleifscheibe (4) steuert, wobei die Messung mittels der Messeinrichtung (30) entlang der Winkelhalbierenden relativ zu der Zustellbewegung der Mess-Lünette (7) erfolgt.

7. Schleifmaschine nach Anspruch 5 oder 6, bei welcher die CNC-gesteuerten Zustellungen der Schleifscheibe (4) und der Mess-Lünette (7) synchron zueinander erfolgen, wobei insbesondere die Mess-Lünette (7) mittels der Steuereinrichtung der X-Achsen-Position der Schleifscheibe (4) nachführbar ist.

8. Schleifmaschine nach einem der Ansprüche 4 bis 7, bei welcher die Winkelhalbierende einen derartigen Winkel zur Senkrechten bildet, dass beim Schleifen ausgeübte resultierende Kräfte den zentrischen Werkstückbereich (9) in das Stützprisma (10) an die Stützteile (11) lagefixierend drücken, insbesondere die Abstützposition eine Endposition der Zustellung ist und das Stützprisma (10) in der Endposition an einem fertiggeschliffenen zentrischen Werkstückbereiches (9) anliegt.

9. Verfahren zum Abstützen und Vennessen von zentrischen Werkstückbereichen (9), insbesondere einer Lagerstelle an Wellenteilen, insbesondere an einer Kurbelwelle, vor und/oder während der Bearbeitung von zentrischen und/oder exzentrischen Werkstückbereichen mittels einer Schleifecheibe, welche eine von einer Steuereinrichtung CNC-gesteuerte Zustellachse aufweist, bei welchem Verfahren eine Messeinrichtung (30) an einer an einem Lünettenarm (19) angeordneten Mess-Lünette (7) gemäß einem der Ansprüche 1 bis 3 auf einer Schleifmaschine gemäß einem der Ansprüche 4 bis 8 in Kontakt mit dem zu vermessenden zentrischen Werkstückbereich mittels einer CNC-Achse des Lünettenarmes (19) gebracht wird und der noch unbearbeitete, teilweise bearbeitete oder fertigbearbeitete zentrische Werkstückbereich vermessen wird.

10. Verfahren nach Anspruch 9, bei welchem die Mess-Lünette (7) mit ihren im Prisma angeordneten Stützteilen an den abzustützenden zentrischen Werkstückbereich (9) so angestellt wird, dass dieser zentrische Werkstückbereich (9) um einen bezüglich der Mittellängsachse (5) des Wellenteils (6) definierten Betrag überdrückt wird. und danach die Mess-Lünette (7) den zentrischen Werkstückbereich (9) auf dessen aktuellem Durchmesser abstützt, oder bei welchem die Mess-Lünette (7) nach dem Vermessen des zentrischen Werkstückbereiches um einen derartigen geringen Betrag auf ihrer CNC-Achse zurückgezogen wird, dass die Mess-Lünette (7) den zentrischen Werkstückbereich (9) auf dessen aktuellem Durchmesser ohne Überdrückung abstützt.

11. Verfahren nach Anspruch 9 oder 10, bei welchem die Mess-Lünette (7) mittels einer Steuereinrichtung auf Basis von durch die Messeinrichtung ihr bereitgestellten Messsignale dem aktuellen Durchmesser des zentrischen Werkstückbereiches (9) bis auf dessen Fertigmaß nachgeführt wird.

12. Verfahren nach einem der Ansprüche 9 bis 11, bei welchem mittels der Steuereinrichtung auf die CNC-gesteuerte X-Achse der Schleifscheibe (4) eine zusätzliche Rundheitskorrektur auf die Zustellwerte der Schleifscheibe (4) in der Art einer Überlagerung aufgeprägt wird.

13. Verfahren nach Anspruch 9, bei welchem die Mess-Lünette (7) bei nicht rotierendem Wellenteil (6) auf der CNC-Achse ihres Lünettenarmes (19) so weit an den zu bearbeitenden zentrischen Werkstückbereich (9) herangefahren wird, dass die Messeinrichtung (30) ein Messsignal des Durchmessers des zentrischen Werkstückbereiches (9) misst, ohne dass die Mess-Lünette (7) den zentrischen Werkstückbereich abstützt, welches Messsignal an die Steuereinrichtung übertragen wird.

14. Verfahren nach Anspruch 9, bei welchem die Mess-Lünette (7) bei rotierendem Wellenteil (6) auf der CNC-Achse ihres Lünettenarmes (19) mit moderater Zustellung so weit an den zu bearbeitenden zentrischen Werkstückbereich (9) herangefahren wird, dass der zentrische Werkstückbereich (9) abgestützt wird und sich das Messsignal der Messeinrichtung (30) nicht mehr ändert, und anschließend das Messsignal an die Steuereinrichtung übertragen wird.

15. Verfahren nach Anspruch 9, bei welchem die Mess-Lünette (7) bei rotierendem Wellen-teil (6) auf der CNC-Achse ihres Lünettenarmes (19) bis auf eine vorgegebene untere Toleranzgrenze des zu bearbeitenden zentrischen Werkstückbereiches (9) an diesen zugestellt wird und die Messeinrichtung (30) erst bei Erreichen dieser Anstellposition den Durchmesser des zentrischen Werkstückbereiches (9) misst und das diesem Durchmesser entsprechende Messsignal an die Steuereinrichtung übertragen wird.

16. Verfahren nach Anspruch 9, 13 oder 14, bei welchem die Schritte gemäß Anspruch 13 und gemäß Anspruch 14 nacheinander ausgeführt werden.

## Claims

1. Measuring steady rest (7) for supporting and measuring central workpiece regions (9), in particular bearing points of shaft parts (6), in particular crankshafts, with integrated measuring device (30) for direct placement on and measurement of the central workpiece regions (9) before and/or during the machining of central and eccentric workpiece regions (9), which, for grinding, can be moved from a retracted position and, for supporting the central workpiece region (9), can be moved into a supporting position on the central workpiece region (9), and has at least two supporting parts (11) which can be delivered to the central workpiece region (9), which support the central workpiece region (9) in respective mutually spaced circumferential regions,
**characterized in that**
the supporting parts (11), forming an opening angle relative to each other on one side flank (22) each of a prism (10), opening in the manner of a fork on a steady rest arm (19) in a fixed position relative to each other and to the steady rest arm (19) and, in the supporting position, below the centre relative to the longitudinal axis (5) of the central workpiece region (9), are arranged in such a way that a bisector formed between the two supporting parts (11) has a fixed acute angle to the perpendicular running through the longitudinal axis (5) of the central workpiece region (9), and CNC-controlled delivery of the steady rest arm (19) to the central workpiece region (9) is carried out along this bisector, on which the measuring device (30) is arranged with respect to its longitudinal axis (31).

2. Measuring steady rest (7) according to Claim 1, in which the steady rest arm (19) can be moved between the retracted and the supporting position by means of only one actuating motor (12) operating on a threaded spindle (13).

3. Measuring steady rest (7) according to Claim 1 or 2, in which the measuring device (30) can be moved independently of the CNC-controlled delivery of the steady rest arm (19), in particular has a probe pin (32) which, in accordance with its contact with the central workpiece region (9) to be measured, is arranged in the longitudinal axis (31) of the measuring device (30) such that it can be moved in order to pick up a measured value on the bisector relative to the CNC-controlled delivery.

4. Grinding machine for grinding central and/or eccentric workpiece regions (9) on workpieces (6), in particular bearing points of in particular crankshafts, having a measuring steady rest (7) with the features according to one of Claims 1 to 3, and having a control device by means of which, before and/or during the grinding carried out by means of an abrasive disc (4) or after the grinding of a central workpiece region (9) has been carried out, the measuring steady rest (7) can be placed on a central workpiece region and the abrasive disc (4) can be delivered by means of its CNC control as far as the finished dimension of the central workpiece region (9), wherein the measuring steady rest (7) is formed as a supporting prism (10) and is configured such that its likewise CNC-controlled delivery movement onto the central workpiece region (9) to be supported is carried out along the bisector of the opening angle of the supporting prism (1 Ü), on which a there is arranged a measuring device (30) which, with respect to its longitudinal axis (31), is aligned with the bisector.

5. Grinding machine according to Claim 4, which has a measuring device which transmits to the control device measured signals of the diameter of the central workpiece region (9) for the delivery position of the measuring steady rest (7) at the bearing point, on the basis of which measured signals the delivery positions of the measuring steady rest (7) are controlled.

6. Grinding machine according to Claim 4 or 5, in which the control device controls the x-axes position of the abrasive disc (4) on the basis of the measured signals, wherein the measurement by means of the measuring device (30) is carried out along the bisector relative to the delivery movement of the measuring steady rest (7).

7. Grinding machine according to Claim 5 or 6, in which the CNC-control delivery of the abrasive disc (4) and of the measuring steady rest (7) is carried out synchronously, wherein in particular the measuring steady rest (7) can be caused to track the x-axis position of the abrasive disc (4) by means of the control device.

8. Grinding machine according to one of Claims 4 to 7, in which the bisector forms an angle to the perpendicular such that resultant forces exerted during grinding force the central workpiece region (9) into the supporting prism (10), fixing the position on the supporting parts (11), in particular the supporting position is an end position of the delivery and, in the end position, the supporting prism (10) rests on a finally ground central workpiece region (9).

9. Method for supporting and measuring central workpiece regions (9), in particular a bearing point on shaft parts, in particular on a crankshaft, before and/or during the machining of central and/or eccentric workpiece regions by means of an abrasive disc, which has a delivery axis CNC-controlled by a control device, in which method a measuring device (30) on a measuring steady rest (7) arranged on a steady rest arm (19) according to one of Claims 1 to 3 on a grinding machine according to one of Claims 4 to 8 is brought into contact with the central workpiece region to be measured by means of a CNC-axis of the steady rest arm (19), and the as yet non-machined, partly machined or finally machined central workpiece region is measured.

10. Method according to Claim 9, in which the measuring steady rest (7) with its supporting parts arranged in the prism is placed on the central workpiece region (9) to be supported such that this central workpiece region (9) is overpressed by an amount defined with respect to the longitudinal mid-axis (5) of the shaft part (6), and after that the measuring steady rest (7) supports the central workpiece region (9) at its current diameter, or in which, following the measurement of the central workpiece region, the measuring steady rest (7) is retracted by such a low amount on its CNC axis that the measuring steady rest (7) supports the central workpiece region (9) at its current diameter without overpressure.

11. Method according to Claim 9 or 10, in which the measuring steady rest (7) is caused to track the current diameter of the central workpiece region (9) down to its finished dimension by means of a control device on the basis of measured signals provided to it by the measuring device.

12. Method according to one of Claims 9 to 11, in which, by means of the control device, an additional roundness correction to the delivery values of the abrasive disc (4) is impressed on the CNC-controlled X axis of the abrasive disc (4) in the manner of a superimposition.

13. Method according to Claim 9, in which, when the shaft part (6) is not rotating, the measuring steady rest (7) is moved so far on the CNC axis of its steady rest arm (19) towards the central workpiece region (9) to be machined that the measuring device (30) measures a measured signal of the diameter of the central workpiece region (9) without the measuring steady rest (7) supporting the central workpiece region, which measured signal is transmitted to the control device.

14. Method according to Claim 9, in which, when the shaft part (6) is rotating, the measuring steady rest (7) is moved so far on the CNC axis of its steady rest arm (19) with a moderate delivery towards the central workpiece region (9) to be machined that the central workpiece region (9) is supported and the measured signal from the measuring device (30) no longer changes, and the measured signal is then transmitted to the control device.

15. Method according to Claim 9, in which, when the shaft part (6) is rotating, the measuring steady rest (7) is delivered on the CNC axis of its steady rest arm (19) towards the workpiece region (9) to be machined as far as a predefined lower tolerance limit of the latter, and, only when this placement position has been reached does the measuring device (30) measure the diameter of the central workpiece region (9), and the measured signal corresponding to this diameter is transmitted to the control device.

16. Method according to Claim 9, 13 or 14, in which the steps according to Claim 13 and according to Claim 14 are performed successively.

## Revendications

1. Lunette de mesure (7) pour supporter et mesurer des zones de pièces centrales (9), en particulier des points d'appui sur des parties d'arbre (6), en particulier des vilebrequins, avec un dispositif de mesure intégré (30) pour l'application directe contre les zones de pièces centrales (9), et pour leur mesure, avant et/ou pendant l'usinage de zones de pièces centrales et/ou excentriques (9), laquelle lunette de mesure peut être amenée pour le meulage, à partir d'une position en retrait, et pour le support de la zone de pièce centrale (9), dans une position de support contre la zone de pièce centrale (9), et présentant au moins deux parties de support (11) pouvant être avancées au niveau de la zone de pièce centrale (9), qui supportent la zone de pièce centrale (9) contre des zones périphériques respectives espacées les unes des autres,
**caractérisée en ce que**
les parties de support (11) sont disposées dans une position fixe les unes par rapport aux autres et par rapport au bras de lunette (19)en formant un angle d'ouverture les unes par rapport aux autres contre un flanc latéral respectif (22) d'un prisme (10) s'ouvrant en forme de fourche au niveau d'un bras de lunette (19) et dans la position de support, sont disposées en dessous du centre par rapport à l'axe longitudinal (5) de la zone de pièce centrale (9) de telle sorte qu'une bissectrice d'angle formée entre les deux parties de support (11) présente un angle aigu fixe par rapport à la verticale s'étendant à travers l'axe longitudinal (5) de la zone de pièce centrale (9) et qu'une avance à commande numérique du bras de lunette (19) contre la zone de pièce centrale (9) ait lieu le long de cette bissectrice d'angle, sur laquelle le dispositif de mesure (30) est disposé par rapport à son axe longitudinal (31).

2. Lunette de mesure (7) selon la revendication 1, dans laquelle le bras de lunette (19) peut être déplacé au moyen de seulement un moteur de commande (12) fonctionnant sur une broche filetée (13) entre la position en retrait et la position de support.

3. Lunette de mesure (7) selon la revendication 1 ou 2, dans laquelle le dispositif de mesure (30) peut être déplacé indépendamment de l'avance à commande numérique du bras de lunette (19), en particulier présente un palpeur (32) qui est disposé de manière déplaçable en fonction de son contact avec la zone de pièce centrale (9) à mesurer, dans l'axe longitudinal (31) du dispositif de mesure (30) pour recevoir une valeur de mesure de la bissectrice par rapport à l'avance à commande numérique.

4. Meuleuse pour le meulage de zones de pièces centrales et/ou excentrées (9) de pièces (6), en particulier de points d'appui notamment de vilebrequins, comprenant une lunette de mesure (7) ayant les caractéristiques de l'une quelconque des revendications 1 à 3, et comprenant un dispositif de commande au moyen duquel, avant et/ou pendant le meulage s'effectuant au moyen d'une meule (4) ou après la fin du meulage d'une zone de pièce centrale (9), la lunette de mesure (7) peut être avancée contre une zone de pièce centrale et la meule (4) peut être avancée jusqu'à la dimension finie de la zone de pièce centrale (9) au moyen de sa commande numérique, la lunette de mesure (7) étant réalisée sous forme de prisme de support (10) et de telle sorte que son déplacement d'avance, également à commande numérique, vers la zone de pièce centrale à supporter (9), s'effectue le long de la bissectrice de l'angle d'ouverture du prisme de support (1Ü), sur laquelle est disposé un dispositif de mesure (30) dont l'axe longitudinal (31) est aligné avec la bissectrice de l'angle.

5. Meuleuse selon la revendication 4, présentant un dispositif de mesure qui transmet des signaux de mesure du diamètre de la zone de pièce centrale (9) pour la position d'avance de la lunette de mesure (7) contre le point d'appui au niveau du dispositif de commande, sur la base desquels signaux de mesure, les positions d'avance de la lunette de mesure (7) sont commandées.

6. Meuleuse selon la revendication 4 ou 5, dans laquelle le dispositif de commande, sur la base des signaux de mesure, commande la position de l'axe X de la meule (4), la mesure s'effectuant au moyen du dispositif de mesure (30) le long de la bissectrice de l'angle par rapport au déplacement d'avance de la lunette de mesure (7).

7. Meuleuse selon la revendication 5 ou 6, dans laquelle les avances à commande numérique de la meule (4) et de la lunette de mesure (7) s'effectuent de manière synchronisée les unes aux autres, notamment la lunette de mesure (7) pouvant suivre la position de l'axe X de la meule (4) au moyen du dispositif de commande.

8. Meuleuse selon l'une quelconque des revendications 4 à 7, dans laquelle la bissectrice de l'angle forme un angle avec la verticale tel que les forces résultantes exercées lors du meulage pressent de manière fixée en position la zone de pièce centrale (9) dans le prisme de support (10) contre les pièces de support (11), en particulier la position de support étant une position de fin de course de l'avance et le prisme de support (10) s'appliquant dans la position de fin de course contre une zone de pièce centrale (9) meulée fini.

9. Procédé de support et de mesure de zones de pièces centrales (9), en particulier d'un point d'appui sur des parties d'arbre, en particulier sur un vilebrequin, avant et/ou pendant l'usinage de zones de pièces centrales et/ou excentriques au moyen d'une meule qui présente un axe d'avance commandé numériquement par un dispositif de commande, dans lequel procédé, un dispositif de mesure (30) sur une lunette de mesure (7) selon l'une quelconque des revendications 1 à 3, disposée sur un bras de lunette (19), sur une meuleuse selon l'une quelconque des revendications 4 à 8, est amené en contact avec la zone de pièce centrale à mesurer au moyen d'un axe à commande numérique du bras de lunette (19) et la zone de pièce centrale pas encore usinée, partiellement usinée ou usinée est mesurée.

10. Procédé selon la revendication 9, dans lequel la lunette de mesure (7) est avancée avec ses parties de support disposées en prisme contre la zone de pièce centrale à supporter (9) de telle sorte que cette zone de pièce centrale (9) soit surpressée dans une mesure définie par rapport à l'axe longitudinal médian (5) de la partie d'arbre (6), puis la lunette de mesure (7) supporte la zone de pièce centrale (9) sur son diamètre actuel ou dans lequel la lunette de mesure (7), après la mesure de la zone de pièce centrale, est ramenée en arrière dans une faible mesure sur son axe à commande numérique de telle sorte que la lunette de mesure (7) supporte la zone de pièce centrale (9) sur son diamètre actuel sans surpression.

11. Procédé selon la revendication 9 ou 10, dans lequel la lunette de mesure (7), au moyen d'un dispositif de commande, sur la base de signaux de mesure qui lui sont fournis par le dispositif de mesure, suit le diamètre actuel de la zone de pièce centrale (9) jusqu'à sa dimension finie.

12. Procédé selon l'une quelconque des revendications 9 à 11, dans lequel, au moyen du dispositif de commande, une correction de rotondité supplémentaire est appliquée aux valeurs d'avance de la meule (4) sous forme de superposition, sur l'axe X à commande numérique de la meule (4).

13. Procédé selon la revendication 9, dans lequel la lunette de mesure (7), lorsque la partie d'arbre (6) ne tourne pas, est avancée sur l'axe à commande numérique de son bras de lunette (19) contre la zone de pièce centrale à usiner (9) dans une mesure telle que le dispositif de mesure (30) mesure un signal de mesure du diamètre de la zone de pièce centrale (9) sans que la lunette de mesure (7) ne supporte la zone de pièce centrale, lequel signal de mesure est transmis au dispositif de commande.

14. Procédé selon la revendication 9, dans lequel la lunette de mesure (7), lorsque la partie d'arbre (6) tourne, est avancée sur l'axe à commande numérique de son bras de lunette (19) avec une avance modérée contre la zone de pièce centrale à usiner (9) dans une mesure telle que la zone de pièce centrale (9) soit supportée et que le signal de mesure du dispositif de mesure (30) ne varie plus et ensuite le signal de mesure est transmis au dispositif de commande.

15. Procédé selon la revendication 9, dans lequel la lunette de mesure (7), lorsque la partie d'arbre (6) tourne, sur l'axe à commande numérique de son bras de lunette (19) jusqu'à une limite inférieure prédéfinie de tolérance de la zone de pièce centrale à usiner (9), est avancée contre celle-ci et le dispositif de mesure (30), seulement une fois cette position d'avance atteinte, mesure le diamètre de la zone de pièce centrale (9) et le signal de mesure correspondant à ce diamètre est transmis au dispositif de commande.

16. Procédé selon la revendication 9, 13 ou 14, dans lequel les étapes selon la revendication 13 et selon la revendication 14 sont effectuées l'une après l'autre.
